# EUROPÄISCHE PATENTANMELDUNG

(11) **EP 1 974 906 A2**
(43) Veröffentlichungstag der Anmeldung: **01.10.2008**
(21) Anmeldenummer: 08003273.3
(22) Anmeldetag: 22.02.2008
(51) Int. Cl.: B32B 23/02, B32B 27/42, B32B 29/00, B32B 29/06, B44C 5/04

(54) **Zusammengesetzter Werkstoff**

(30) Priorität: 22.02.2007 EP 07003678
(71) Anmelder: Hermes Schleifkörper GmbH, 01237 Dresden (DE)
(72) Erfinder: König, Eberhard, 01237 Dresden (DE)
(74) Vertreter: Glawe, Delfs, Moll

(57) **Zusammenfassung**

Gegenstand der Erfindung ist ein zusammengesetzter Werkstoff (1). Erfindungsgemäß ist vorgesehen, dass er einen Träger (4) aus einem Faserwerkstoff (Faserträger) aufweist, auf dem mindestens ein Material (5) mit abriebfesten und/oder kratzbeständigen Eigenschaften fixiert ist.

## Beschreibung

Diese Erfindung betrifft einen zusammengesetzten Werkstoff und Paneele, die solche zusammengesetzten Werkstoffe umfassen. Insbesondere betrifft die Erfindung einen pulverförmigen oder granulatförmigen zusammengesetzten Werkstoff, der abriebfeste und/oder kratzbeständige Eigenschaften bewirkt. Pulverförmige Werkstoffe mit abriebfesten Eigenschaften erfahren viele Anwendungsmöglichkeiten. So können sie beispielsweise bei der Herstellung von Laminatpaneelen als eine Decklage auf Basis mindestens eines harzgetränkten Trägerbogens, beispielsweise aus Papier, umfassenden Typs angewendet werden.

Laminatpaneele dieses Typs können auf vielerlei Arten hergestellt werden. Beispielsweise können sie anhand einer DPL(Direct Pressure Laminate/Direktverpressungslaminat)-Technik hergestellt werden, wobei dieser harzgetränkte Trägerbogen, eventuell zusammen mit einem oder mehreren anderen harzgetränkten Trägerbögen, bei erhöhtem Druck und erhöhter Temperatur mit Hilfe eines Presselements auf einer Basisplatte, wie etwa einer MDF- oder HDF (mitteldichte Faserplatte oder hochverdichtete Faserplatte)-Platte oder Spanplatte, verfestigt werden kann. Laminatpaneele können beispielsweise auch anhand einer HPL (High Pressure Laminate/Hochdruck-Laminat)-Technik verwirklicht werden, wobei der harzgetränkte Trägerbogen zusammen mit anderen harzgetränkten Trägerbögen zusammengestellt oder verfestigt wird, wonach die auf diese Weise erhaltene Deckschicht auf einer Basisplatte oder auf dem Substrat angebracht wird.

Sowohl bei einer DPL-Technik als auch bei einer HPL-Technik umfassen die Laminatpaneele ein Dekor, das beispielsweise ein Motiv aufweisen kann und das durch einen Aufdruck und/oder eine Einfärbung gebildet sein kann, welches üblicherweise auf wenigstens einem der vorgenannten Trägerbogen vorgesehen ist und welches das Aussehen der Dekorseite der Paneele bestimmt .

Es ist, beispielsweise aus US 4,505,974, bekannt, in der Deckschicht solcher Paneele harte, das heißt abriebfeste und/oder kratzbeständige, partikelförmige Werkstoffe, wie etwa Aluminiumoxid, auch Korund genannt, Siliziumoxid, Titanoxid, Zinnoxid, Zirkoniumoxid, anzuwenden, gegebenenfalls mit einem Überzug versehen, mit der Absicht, eine abriebfeste oder kratzfeste Schicht über dem vorgenannten Dekor oder dem vorgenannten Aufdruck zu bilden.

Die Tests, die Kratzbeständigkeit und Abriebfestigkeit beschreiben, sind dem Fachmann geläufig. Abriebfestigkeit wird zum Beispiel bei Laminatfußbodenpaneelen standardmäßig als eine Anzahl Umdrehungen, IP-Wert (Initial wear point), gemessen, die ein Schleifrad ausführen muss, bevor das Dekor eines Laminatfußbodens angegriffen wird, wie in EN 13329 Anhang E beschrieben, auch Tabertest genannt. Kratzbeständigkeit wird durch visuelles Wahrnehmen der Sichtbarkeit von Kratzern, die mit unterschiedlicher Druckkraft mit einer Standard-Nadelspitze in der Oberfläche angebracht worden sind, ermittelt. Je größer die zur Bildung eines sichtbaren Kratzers erforderliche Druckkraft, desto größer die Kratzbeständigkeit der Oberfläche. Auch Scheuerschwämme werden zur visuellen Beurteilung von Kratzern angewendet. Es ist deutlich, dass es für einen Kratzer nicht erforderlich ist, dass das Dekor an sich angegriffen wird. Ein blo-ßes Angreifen des Harzes der Deckschicht ist ausreichend. Für andere Beispiele von Prüfverfahren wird auch auf US 4,505,974 verwiesen.

Die aus dem Stand der Technik bekannten harten Partikel und abriebhemmenden und/oder kratzerhemmenden Schichten weisen jedoch verschiedene Nachteile auf. So lässt beispielsweise die Bindung von Aluminiumoxidpartikeln oder anderen keramischen Partikeln mit dem in der Deckschicht von Laminatpaneelen vorhandenen Harz zu wünschen übrig. Schlecht gebundene abriebfeste Partikel können an sich zu einer verminderten Kratzbeständigkeit führen, da sie, sobald sie sich aus der Oberfläche des Laminatpaneels gelöst haben, selbst zur Entstehung von Kratzern führen können. Auch können schlecht gebundene Partikel zu einer verminderten Sichtbarkeit des darunterliegenden Dekors führen. In solchem Fall spricht man von einer verminderten Transparenz der über dem Dekor vorhandenen Harzschicht. Aus dem Stand der Technik, beispielsweise aus US 4,505,974, ist es bekannt, dem Problem der Bindung an das Harz durch Zusatz von Bindemitteln, wie etwa Cellulose, Carboxymethycellulose (CMC) oder Silanhaftvermittlern zu dem Harz abzuhelfen. Zur Anwendung von Cellulose als getrenntes Bindemittel in dem Harzgemisch wird angemerkt, dass dies zu einer erhöhten Viskosität führen und dadurch Schwierigkeiten in Bezug auf die Weise, in der das Harzgemisch auf den vorgenannten Trägerbögen oder auf den vorgenannten Paneelen im Allgemeinen angebracht werden kann, hervorrufen kann.

Die Erfinder sind sich der Tatsache bewusst, dass, um dem Problem der Bindung im Harz abzuhelfen, der Stand der Technik auch sogenannte silanisierte Korundpartikel umfasst. Dies sind Aluminiumoxidpartikel, die an ihrer Außenfläche mit einer Si-OH-Gruppe modifiziert worden sind.

Die Erfindung bezweckt einen zusammengesetzten Werkstoff, der verbesserte abriebfeste und/oder kratzbeständige Eigenschaften besitzt, wobei dieser zusammengesetzte Werkstoff beispielsweise bei der Herstellung von Laminatpaneelen angewendet werden, jedoch auch andere Anwendungen erfahren kann. Die Erfindung ist in den Patentansprüchen definiert und betrifft gemäß ihrem ersten Aspekt einen zusammengesetzten Werkstoff, der mindestens ein Trägersubstrat aus einem Fasermaterial (Faserträger) aufweist, auf dem mindestens ein Material mit abriebfesten und/oder kratzbeständigen Eigenschaften fixiert ist. Besonders bevorzugt als Faserträger ist Cellulose. Andere Natur- oder Kunstfasern können ebenfalls verwendet werden.

Die Kombination von Cellulose und einem vorzugsweise partikelförmigen Material mit abriebfesten und/oder kratzbeständigen Eigenschaften in einem zusammengesetzten Werkstoff eröffnet viele neue Möglichkeiten. So kann beispielsweise durch Anwendung des zusammengesetzten Werkstoffs der vorliegenden Erfindung, einer Vielzahl von Produkten, die ursprünglich nur Cellulose enthalten, auf einfache Weise eine gewisse Verschleißfestigkeit oder Kratzbeständigkeit verliehen werden. Einem anderen Beispiel gemäß können die Eigenschaften von Cellulose und/oder des zusammengesetzten Werkstoffs als Ganzes gebraucht werden, um auf einfachere und/oder effizientere Weise kratzbeständige oder verschleißfeste Partikel, wie etwa mineralische oder keramische Partikel, auf oder in einem Produkt anzubringen.

Als abriebfestes oder kratzbeständiges Material kann jedes Material angewendet werden, das härter als Cellulose ist. Vorzugsweise wird ein Material angewendet, das eine Härte aufweist, die mindestens das Doppelte oder Vierfache der Härte von Cellulose beträgt. Das vorgenannte abriebfeste oder kratzbeständige Material besteht bevorzugt aus einem mineralischen oder keramischen Werkstoff, aus der Gruppe von Aluminiumoxid, Siliziumdioxid, Titandioxid, Zinnoxid, Zirkoniumoxid, Siliciumcarbid, Borcarbid und Diamant. Diese Materialien sind für ihre Verschleiß- und Kratzbeständigkeit bekannt. Auch andere mineralische oder keramische Materialien weisen diese Eigenschaften auf.

Technische Keramikmaterialien, die auf Grundlage sehr reiner Grundstoffe hergestellt werden, sind gut als abriebfestes oder kratzbeständiges Material geeignet, da die reinen Grundstoffe zu einer hohen Transparenz der daraus hergestellten Keramikmaterialien führen. Verunreinigungen in den Grundstoffen können bspw. zu einer Gelbfärbung führen und damit die Eignung der Materialien für eine transparente Overlay- Beschichtung beeinträchtigen. Geeignet sind aber auch Stoffe, die aus natürlichen Gesteinen gewonnen werden. Wichtige Stoffgruppen in diesem Zusammenhang sind beispielsweise Metalloxide, Metallcarbide oder Metallnitride. Die Stoffe können auch in Mischungen verwendet werden.

Es ist deutlich, dass das abriebfeste oder kratzbeständige Material nicht unbedingt auf natürliche Weise gewonnen sein muss, sondern auch synthetisch hergestellt sein kann. Weiter wird angemerkt, dass das abriebfeste oder kratzbeständige Material nicht unbedingt eine Kristallstruktur aufweisen muss; dieses Material kann auch in einer amorphen Variante eingesetzt werden. So kann erfindungsgemäß anstelle von Siliziumdioxidkristallen auch Glas als abriebfestes und/oder kratzbeständiges Material angewendet werden.

Auch ist deutlich, dass Metalle oder Metalllegierungen erfindungsgemäß nicht als abriebfestes oder kratzbeständiges Material ausgeschlossen sind.

Vorzugsweise werden mehrere abriebfeste oder kratzbeständige Partikel auf demselben Celluloseträger fixiert, was die hier voranstehend beschriebenen Vorteile vergrößert. Eventuell kann die Anzahl derartiger Partikel auf dem Celluloseträger innerhalb gewisser Grenzen feststehen, sodass die Dosierung dieser abriebfesten oder kratzbeständigen Materialpartikel mittels der größeren Einheiten des zusammengesetzten Werkstoffs auf einfache Weise stattfinden kann.

Der zusammengesetzte Werkstoff kann sowohl faserförmig als auch partikelförmig sein. Mit "partikelförmig" ist im Allgemeinen gemeint, dass der Werkstoff nicht faserförmig ist, sondern eher eine kugelförmige oder andere nicht-längliche Form aufweist. Jede dieser Möglichkeiten hat ihre spezifischen Vorteile in Hinblick auf ihre Handhabung und ihren Gebrauch in bestimmten Anwendungen. Mit einem faserförmigen zusammengesetzten Werkstoff kann in einem Produkt ein dichtes, dreidimensionales Netzwerk von Fasern gebildet werden oder es können die Fasern, und damit auch die darauf fixierten abriebfesten und/oder kratzbeständigen Partikel, in zweidimensionalen Lagen ausgerichtet werden, während mit einem partikelförmigen zusammengesetzten Werkstoff eher eine gleichförmige Verteilung der abriebfesten oder kratzbeständigen Partikel bewirkt werden kann.

Aus dem Obigen ist deutlich, dass der zusammengesetzte Werkstoff vorzugsweise in Form loser Partikel oder Fasern zur Verfügung gestellt wird, wie beispielsweise in Form eines Pulvers oder eines Granulatmaterials, das dann derartige lose zusammengesetzte Partikel und/oder zusammengesetzte Fasern umfasst. Es ist jedoch nicht ausgeschlossen, dass mehrere derartiger zusammengesetzter Partikel und/oder Fasern miteinander verbunden werden, sei es mit oder ohne Gebrauch eines Mittlerstoffs, wie etwa eines Harzes oder Bindemittels. So kann der zusammengesetzte Werkstoff beispielsweise in Form von Presskörpern, das zusammengesetzte Partikel und/oder Fasern umfasst, auf den Markt gebracht werden.

Der zusammengesetzte Werkstoff der Erfindung, so beispielsweise die Fasern oder die Partikel im Fall von jeweils faserförmigem und/oder partikelförmigem zusammengesetztem Werkstoff, weisen vorzugsweise eine maximale Abmessung zwischen 1 und 700 µm, bevorzugt zwischen 5 und 100 µm und noch besser zwischen 20 und 70 µm auf.

Der Celluloseträger kann aus unterschiedlichen, cellulosebasierten Materialen bestehen; beispielsweise kann der vorgenannte Celluloseträger aus Cellulose-Mikrofasern und/oder mikrokristalliner Cellulose bestehen. Die Mikrofasern und die mikrokristalline Cellulose weisen hierbei vorzugsweise eine Fasergröße beziehungsweise Partikelgröße zwischen 5 und 600 µm, bevorzugt zwischen 10 und 100 µm und noch besser zwischen 20 und 60 µm auf.

Das vorgenannte abriebfeste oder kratzbeständige Material besteht bevorzugt aus Partikeln mit einer durchschnittlichen Größe zwischen 0,7 und 70 µm und noch besser zwischen 5 und 30 µm.

Diese Abmessungen des zusammengesetzten Werkstoffs, der abriebfesten und/oder kratzbeständigen Partikel und des Trägermaterials sind interessant, da der zusammengesetzte Werkstoff in solchem Fall einfach mehrere abriebfeste oder kratzbeständige Partikel oder selbst mehrere Cellulosebestandteile enthalten kann. Dieser ist besonders geeignet zur Anwendung in der Deckschicht von Laminatpaneelen.

Das vorgenannte abriebfeste oder kratzbeständige Material kann seinerseits mit reiner Oberfläche, bereits gecoatet, anionisch oder kationisch oberflächen-modifiziert, compoundiert, mikrostrukturiert, oder bevorzugt silanisiert eingesetzt werden, jeweils entsprechend der Anwendung des zusammengesetzten Werkstoffs.

Das vorgenannte abriebfeste oder kratzbeständige Material wird vorzugsweise durch thermomechanische oder elektrische Kräfte, Adhäsion, Vernetzung, Verpressung oder Trocknung auf die Oberfläche der Celluloseträger aufgebracht bzw. darauf fixiert. Mittels dieser Verfahren kann eine gute mechanische Stabilität des zusammengesetzten Werkstoffs erzielt werden.

Der zusammengesetzte Werkstoff kann vorzugsweise Fixiermittel zum Beschichten oder Fixieren des vorgenannten abriebfesten oder kratzbeständigen Materials auf dem vorgenannten Celluloseträger enthalten. Eine sehr hohe mechanische Stabilität kann erzielt werden, wenn die vorgenannten getrennten Fixiermittel zumindest teilweise aus nanoskaligen Partikeln bestehen, die vorzugsweise nach dem im Stand der Technik bekannten Sol-Gel-Verfahren aus einer nanoskaligen kolloidalen Lösung oder Dispersion erhalten worden sind, beispielsweise durch das Austrocknen einer solchen Lösung oder Dispersion . So können beispielsweise stabile zusammengesetzte Werkstoffe erhalten werden, wenn sie 2-90 Gew.-% Faserträger, vorzugsweise Cellulose, 1-50 Gew.-% nanoskalige Partikel und 1-60 Gew.-% Material mit abriebfesten und/oder kratzbeständigen Eigenschaften umfassen.

Die nanoskaligen Partikel weisen bevorzugt eine mittlere Teilchengröße d50 von 1 bis 150 nm, vorzugsweise 2 bis 100 nm, weiter vorzugsweise 3 bis 75 nm, weiter vorzugsweise 4 bis 50 nm, weiter vorzugsweise 5 bis 30 nm auf.

Wenn solcher zusammengesetzter Werkstoff beim Beschichten eines Produkts, beispielsweise in der Deckschicht eines Laminatpaneels, beispielsweise eines Möbelpaneels oder eines Fußbodenpaneels, angewendet wird, kann er die antistatischen Schichtparameter verbessern, viskositätsmindernd bezüglich des zusammengesetzten Werkstoffs beispielsweise im Harz wirken und/oder die Senkung des Presselementverschleisses, beispielsweise Pressblechverschleisses, unterstützen. Letzteres ist vor allem nützlich bei beschichteten Paneelen mit einer Deckschicht, die anhand einer DPL-Technik hergestellt ist.

Die vorgenannte nanoskalige kolloidale Lösung oder Dispersion enthält bevorzugt zwischen 3 und 60 Gewichtsprozent Feststoff. Die Erfinder haben festgestellt, dass mit solchen kolloidalen Lösungen oder Dispersionen eine gute Bindekraft des abriebfesten oder kratzbeständigen Materials auf der Celluloseoberfläche und eine effiziente Fertigung des zusammengesetzten Werkstoffs erzielt werden kann. Vorzugsweise besteht die kolloidale Lösung oder Dispersion auf Wasser und/oder Harzbasis.

Weiter kann die vorgenannte kolloidale Lösung oder Dispersion eine oder mehrere der folgenden drei Eigenschaften aufweisen:
- die Eigenschaft, dass die vorgenannte nanoskalige kolloidale Lösung oder Dispersion als Feststoff nanoskalige Partikel aus Silicium-, Aluminium-, Zink-, Cer- und/oder anderen Metalloxide und/oder ebensolche in oberflächenmodifizierter Form enthält;
- die Eigenschaft, dass der vorgenannte Feststoff als Kieselsäuresol zur Anwendung kommt;
- die Eigenschaft, dass die vorgenannten nanoskaligen Partikel eine BET-Oberfläche von 1700 m²/g bis 10 m²/g besitzen.

Die vorgenannten Eigenschaften haben den Vorteil, dass sie die Einfachheit und Effizienz einer wirtschaftlichen Fertigung mit einer hohen erzielten Bindekraft an die Celluloseoberfläche kombinieren Die vorgenannte kolloidale Lösung oder Dispersion sollte mindestens zwei, und besser noch alle drei vorgenannten Eigenschaften aufweisen.

Der zusammengesetzte Werkstoff der Erfindung kann über eine solche mechanische Stabilität verfügen, dass er einer Zerstörung im Ultraschallbad widersteht. So ist es beispielsweise möglich, dass, wenn die Verteilung der Partikelgröße oder Fasergröße des zusammengesetzten Werkstoffs, ausgedrückt in Volumenprozent, mit anderen Worten, das Korngrößenspektrum, vor und nach dem Ultraschallbad verglichen wird, diese Verteilung nahezu nicht beeinträchtigt ist oder eine Veränderung von 1 Vol.-% oder weniger aufweist. Dies ist sogar möglich, wenn eine 35kHz-Frequenz während 10 min bis zu 1 h aufrechterhalten wird und die zusammengesetzten Werkstoffteilchen, das heißt zusammengesetzte Partikel oder Fasern, einer Schwingungsleistung zwischen 200 und 300 Watt ausgesetzt werden. Das Ultraschallbadverfahren testet vor allem die Bindekraft, womit die Partikel des abriebfesten oder kratzbeständigen Materials an die Celluloseoberfläche geheftet sind.

Angemerkt wird, dass das System dieser drei Komponenten, nämlich das System des Celluloseträgers, nanoskaliger Partikel und abriebfesten und/oder kratzbeständigen Materials, in seiner Zusammensetzung entsprechend der zu bevorzugenden Eigenschaften optimierbar ist. Im optimalen Fall ist von einer 30- bis 80-prozentigen Belegung der Oberfläche der Cellulose mit abriebfestem oder kratzbeständigem Material auszugehen, so dass beispielsweise eine Schicht aus derartigen Partikeln auf dem Celluloseträger gebildet werden kann. Auch können mehrere Partikelschichten des abriebfesten oder kratzbeständigen Materials übereinander angeordnet oder mehrere Partikel des zusammengesetzten Werkstoffs verbunden sein. Es wird jedoch bevorzugt, dass per Korn des zusammengesetzten Werkstoffs nur eine solche Partikelschicht vorhanden ist und/oder dass der Träger durch nur einen Cellulosepartikel oder eine Cellulosefaser gebildet wird.

Solch zusammengesetzter Werkstoff kann auf verschiedene Art und Weise hergestellt werden. Ein geeignetes Verfahren umfasst den Schritt des Fixierens des vorgenannten abriebfesten oder kratzbeständigen Materials auf dem vorgenannten Celluloseträger, wobei, optional in einem vorhergehenden Schritt, zum Erhalten der Fixierung als Binde- und/oder Funktionsmittel nanoskalige Lösungen oder Dispersionen verwendet werden. Bevorzugt ist die kolloidale Lösung oder Dispersion auf Wasser- und/oder Harzbasis. Auch kann die Lösung oder Dispersion Kieselsäure enthalten.

Mit diesem Verfahren können sehr harte mineralische und/oder keramische Partikel mit hochporöser Cellulose mechanisch stabil verbunden werden. Beispielsweise kann die Stabilität der Verbindung derart sein, dass die vorteilhaften Eigenschaften eines eventuellen Cellulose-Polymerverbundes nicht oder nahezu nicht negativ beeinflusst werden. Derartige Cellulose-Polymerverbunde können entstehen, wenn der zusammengesetzte Werkstoff der Erfindung in einem Harz, wie etwa einem Melaminharz, angewendet wird, wie dies der Fall sein kann, wenn der zusammengesetzte Werkstoff als kratzer- oder verschleißhemmender Bestandteil in der Deckschicht eines Laminatpaneels, wie etwa eines Möbelpaneels, eines Fußbodenpaneels, eines Wandpaneels, Deckenpaneels oder dergleichen eingesetzt wird. Im Fall von Möbelpaneelen können die erhaltenen Paneele beispielsweise als Arbeitsplatte angewendet werden.

Vorzugsweise werden die vorgenannten nanoskaligen Lösungen oder Dispersionen mit dem Material des vorgenannten Celluloseträgers in Kontakt gebracht, optional durch Sprühen, beispielsweise durch das Besprühen der Cellulosefasern und/oder mikrokristalliner Cellulose des Träges mit dieser Lösung oder Dispersion, wobei das vorgenannte Material des Celluloseträgers vorzugsweise fortlaufend und/oder kontinuierlich umgewälzt wird. Auf diese Weise kann beispielsweise dafür gesorgt werden, dass das Aufbringen des Binde-/Funktionsmittels auf die Cellulose auf solche Weise stattfindet, dass es nur schwach eindringt und nur punktuell, aber mit hoher Punktdichte gleichmäßig die Oberfläche des Trägermaterials bedeckt. Hierin unterscheidet sich das anzuwendende Verfahren prinzipiell von einem Beschichter mit üblichen anorganischen oder organischen Bindemitteln oder Klebern.

Nach dem Aufbringen des Binde-/Funktionsmittels auf die Cellulose wird die nanoskalige Lösung oder Dispersion angetrocknet, bevorzugt auf der Celluloseoberfläche. Dies kann beispielsweise mittels einer Trocknung mit Luft erfolgen, beispielsweise in einem Ofen.

Mittels derartiger Antrocknung wird vorzugsweise ein Zustand verwirklicht, worin an der Oberfläche des vorgenannten Materials des Celluloseträgers nanoskalige Partikel vorhanden sind und wobei vorzugsweise in diesem Zustand eine gewisse Bindekraft an der Oberfläche der mit nanoskaligen Partikeln beschichteten Celluloseoberfläche vorhanden ist, und noch besser die erhaltene Bindekraft derart ist, dass das abriebfeste oder kratzbeständige Material an der Celluloseoberfläche und/oder an dem vorgenannten nanoskaligen Partikel fixiert werden kann. Gleichzeitig mit dem Antrocknen der Lösung oder Dispersion kann eine Kombination von Oberflächenkräften entstehen, die mineralische Partikel bis zu einer bestimmten Partikelgröße an den Celluloseträger binden können. Außerdem wird angemerkt, dass die Behandlung des Celluloseträgermaterials mit einer nanoskaligen, kolloidalen Lösung oder Dispersion auch einen Zustand bewerkstelligen kann, worin die viskositätserhöhende Wirkung der Cellulose verringert ist.

Vorzugsweise umfasst das Verfahren auch mindestens den Schritt des Trocknens des erhaltenen zusammengesetzten Werkstoffs, nachdem, wie vorgenannt, das abriebfeste oder kratzbeständige Material mindestens teilweise auf dem Celluloseträger fixiert ist. Auch diese Trocknung findet vorzugsweise durch eine Lufttrocknung, beispielsweise in einem Ofen, statt.

Das Verfahren kann auch den Schritt des Verdichtens des erhaltenen zusammengesetzten Werkstoffs mit einer Hydraulikpresse umfassen, nachdem, wie vorangehend erwähnt, das abriebfeste oder kratzbeständige Material mindestens teilweise auf dem Celluloseträger fixiert ist. Anhand einer solchen Verdichtung kann erhalten werden, dass beispielsweise die mineralischen und/oder keramischen Partikel in die Cellulose hineingedrückt werden. Durch die Verdichtung können eventuell größere Abmessungen des zusammengesetzten Werkstoffs erreicht werden. Das Ausführen einer derartigen Verdichtung kann beispielsweise auch wünschenswert sein, falls aus anwendungstechnischen Gründen die nanoskalige Lösung oder Dispersion nur in geringer Konzentration zum Einsatz kommen kann. Um dennoch den Verbund aus Cellulose und beispielsweise mineralischen und/oder keramischen Partikeln mechanisch stabil zu gestalten, kann er unter Drücken, die bei der Schleifkörperherstellung üblich sind, verpresst werden. Zum Beispiel wird dazu das nur wenig angefeuchtete und noch kaum verbundene Gemisch bereits nach Zugabe der mineralischen und/oder keramischen Komponente in einer hydraulischen Presse, beispielsweise mit etwa 20 MPa, verdichtet. Die zylindrischen Presslinge mit etwa 250 mm Durchmesser und 6 mm Dicke können anschließend in einem Backenbrecher etwa in 5x5X5 mm große Stücke gebrochen werden und dann über eine Schlagnasenmühle in zusammengesetzte Werkstoff-Fertigerzeugnisse verwandelt werden.

Auch kann das Verfahren den Schritt umfassen, den zusammengesetzten Wertstoffs in das gewünschte Korngrößenspektrum zu bringen. Dies kann beispielsweise durch Absiebung mit einem Doppeldeck-Langsieb erreicht werden. Ein solches Langsieb hat gute Wurfparabeln und erzeugt wenig Abrieb. Anhand dieses Verfahrens kann, beispielsweise in dem Fall, dass eventuelle Zusammenballungen mehrerer Körner des zusammengesetzten Werkstoffs vorkommen, eine schonende Zerkleinerung durchgeführt werden. Die Zerkleinerung ist bevorzugt ebenfalls so schonend, dass eine völlige Zerteilung der Bestandteile des einzelnen zusammengesetzten Werkstoffs gering bleibt.

Bei dem vorgenannten Schritt der Klassierung können die erhaltenen zusammengestellten Werkstoffpartikel und/oder Werkstofffasern, die eine zu geringe Größe aufweisen, sogenanntes Feinkorn, sofort einer darauf folgenden Charge als Ausgangsmaterial beigemischt werden. Die erhaltenen Körner, die zu große Abmessungen aufweisen, oder sogenanntes Überkorn, können über eine Mühle, wie beispielsweise über eine Schlagnasenmühle, zerkleinert werden.

Es wird angemerkt, dass die Partikelgröße des zusammengesetzten Werkstoffs gemäß einer oder mehrerer der folgenden Möglichkeiten bestimmt werden kann, nämlich durch:
- die Partikelgröße der eingesetzten Cellulosefasern bzw. der mikrokristallinen Cellulosepartikel;
- dem Grad der Anfeuchtung der Cellulose, da sich mit steigender Feuchte die Cellulose zusammenballt und sich Trägerkerne bilden, die mehrere Cellulosefasern und/oder Cellulosepartikel umfassen. Die Anfeuchtung der Cellulose geschieht bevorzugt ausschließlich oder doch mindestens im Wesentlichen durch vorgenannte nanoskalige Lösung oder Dispersion;
- die Partikelgröße und den Gewichtsanteil der abriebfesten oder kratzbeständigen Materialkomponente des zusammengesetzten Werkstoffs. Im optimalen Fall ist von einer 30- bis 80-prozentigen Belegung der Oberfläche der Cellulose mit abriebfesten oder kratzbeständigen Materialpartikeln auszugehen. Bei hoher Anfeuchtung können auch mehrere Partikelschichten des Minerals übereinander angeordnet bzw. können mehrere Partikel des zusammengesetzten Werkstoffs verbunden werden.

Die Dichte des zusammengesetzten Werkstoffes wird u.a.vom Konzentrationsverhältnis zwischen Cellulose und abriebfestem bzw. kratzbeständigem Material bestimmt und vorzugsweise zweckgerichtet im Bereich 0,75 - 3,0 g /cm3 eingestellt. Dies ist vorteilhaft, um das Schwebeverhalten in der Harzmischung variieren zu können und um die Möglichkeit der Fluidisierung des zusammengesetzten Werkstoffes für einen Materialauftrag mit einer gerichteten zirkulierenden Wirbelschicht zu nutzen.

Hinsichtlich der mechanischen Festigkeit der mineralischen Partikel in dem zusammengesetzten Werkstoff wurde als Gradmesser das Verhalten im Ultraschallbad gewählt. Vorzugsweise wird eine Schwingungsfrequenz von 35kHZ angewendet und eine Schwingungsenergie von ungefähr 240 Watt während 10 min bis zu 1 h. Wie vorangehend erwähnt, darf hier kein merklicher Zerfall des zusammengesetzten Werkstoffs feststellbar sein. Um die mechanische Stabilität des zusammengesetzten Werkstoffs noch weiter zu steigern, kann die Ausübung eines Pressdrucks auf ein zweckmäßig gewähltes Volumen einer Anhäufung des zusammengesetzten Werkstoffs vorgesehen werden.

Weiter ist es deutlich, dass der zusammengesetzte Werkstoff auf günstige Weise bei Möbel- und/oder Fußbodenpaneelen oder bei anderen Paneelen mit einer Deckschicht, wie etwa einer Laminatdeckschicht, eingesetzt werden kann und dass anhand dieses Partikels, abriebfeste und/oder kratzbeständige Oberflächen erhalten werden können. Wie vorangehend beschrieben, betrifft dies zusammengesetzte Werkstoffe, die mindestens aus zwei Bestandteilen aufgebaut sind, worunter einerseits ein erster Bestandteil auf Basis eines abriebfesten oder kratzbeständigen Materials, beispielsweise eines mineralischen oder keramischen Werkstoffs, und andererseits ein zweiter Bestandteil auf Basis von Cellulose zu verstehen ist. Die zusammengesetzten Werkstoffteilchen befinden sich vorzugsweise im Wesentlichen auf der Oberseite oder Nutzseite des Paneels oder unmittelbar darunter. Auf diese Weise wird eine aktive Wirkung des zusammengesetzten Werkstoffs an der Oberfläche des Paneels erhalten, was von Bedeutung ist, wenn eine abrieb- und/oder kratzerhemmende Wirkung verlangt wird.

Die Tatsache, dass der zusammengesetzte Werkstoff unter anderem einen Bestandteil auf Basis von Cellulose enthält, eröffnet viele neue Möglichkeiten bei Paneelen des oben angeführten Typs.

Im Fall, dass die vorgenannte Deckschicht Harz enthält, kann die Cellulose des zusammengesetzten Werkstoffs für eine gute Haftung an dem Harz der Deckschicht sorgen, sodass ein geringeres Risiko des Absinkens des abriebfesten oder kratzbeständigen Materials auf darunterliegenden Harzlagen erhalten werden kann. So kann die Cellulose dafür sorgen, dass der Auftrieb der mineralischen und/oder keramischen Partikel bei der Fertigung eines derartigen Paneels in der noch flüssigen Polymermatrix durch ihre feste Verbindung mit der Cellulose erhöht werden kann. Dadurch kann die Anreicherung von mineralischen und/oder keramischen Partikeln sich auch in den unmittelbaren Oberflächenschichten vollziehen.

Es wird angemerkt, dass Cellulose vor allem mit Melaminharzen, wie etwa Melaminformaldehydharz, eine gute Haftung bewirken kann. Die Viskositätserhöhung, die Cellulose normalerweise in Melaminharzen oder Suspensionen davon verursacht und die in vielen Fällen, beispielsweise bei der Herstellung von Laminatpaneelen, unerwünscht ist, kann anhand der zusammengesetzten Partikel dadurch begrenzt werden, dass die Cellulose präzise dosiert werden kann und dort anwesend ist, wo sie aktiv sein soll, nämlich an der Grenzfläche zwischen dem abriebfesten oder kratzbeständigen Materialpartikel und dem Harz der Deckschicht. Auch die Passivierung der Celluloseoberfläche mit Nanopartikeln, wie dies bei einer bevorzugten Ausführungsform der Fall ist, kann eine Verminderung der Viskositätserhöhung der Harze beim Einsatz von Cellulose bewirken. Weiter ist es möglich, eine Absenkung des elektrischen Oberflächenwiderstandes und damit der antistatischen Eigenschaften des zusammengesetzten Werkstoffes durch Auswahl leitfähiger Nanopartikel beim Beschichten der Cellulosefasern und/oder Cellulosepartikel zu erhalten.

Durch diese Einstellbarkeit des spezifischen Oberflächenwiderstandes auf einen Bereich von 10⁹ - 10¹² Ohm x m eignet sich der zusammengesetzte Werkstoff sehr gut für die elektrostatische Streuung sowohl aufwärts als auch abwärts im Sinne des elektrostatischen Beflockens.

Vorzugsweise sind die vorgenannten zusammengesetzten Werkstoffpartikel und/oder -fasern, oder jedenfalls doch mindestens der abriebfeste oder kratzbeständige Bestandteil davon, in der obersten Harzschicht oder in der Harzschicht, die am dichtesten bei der Nutzseite des Paneels liegt, konzentriert oder es befinden sich mit anderen Worten vorzugsweise wenigstens 50% des zusammengesetzten Werkstoffs in dieser Harzschicht. Die oberste Harzschicht erstreckt sich dabei vorzugsweise von der Oberfläche der Deckschicht bis auf eine Tiefe von 5 bis 75 µm unter die Oberfläche der Deckschicht und noch besser bis auf eine Tiefe von 15 bis 50 µm unter die Oberfläche der Deckschicht. Mit dieser Konzentration zusammengesetzter Werkstoffteilchen, kann ein Paneel mit guten oder verbesserten abrieb- und kratzerhemmenden Eigenschaften erhalten werden. Auch ist es möglich, dass Transparenzverlust bei ein und derselben Kratz- und/oder Abriebfestigkeit in Bezug zum Stand der Technik minimiert ist.

Obwohl die Partikel des abriebfesten oder kratzbeständigen Materials sich bevorzugt dicht an der Oberfläche des Laminatpaneels befinden, ist es möglich, dass, beispielsweise im Fall einer DPL-Deckschicht, eine Verringerung des Presselementverschleisses oder des Pressplattenverschleisses durch verringerte Partikelgrösse und Abfederung des eingesetzten abriebfesten oder kratzbeständigen Materials anhand der in dem zusammengesetzten Werkstoff vorhandenen Cellulose erhalten wird.

Im Fall, dass als abriebfester oder kratzbeständiger Bestandteil des zusammengesetzten Werkstoffs ein Werkstoff mit einem niedrigen Brechungsindex, wie etwa Titandioxid oder bevorzugt Aluminiumoxid, gewählt wird, kann der vorgenannte Transparenzverlust noch weiter eingeschränkt werden.

Im Fall, dass das abriebfeste oder kratzbeständige Material an sich im Wesentlichen aus Partikeln mit einer durchschnittlichen Größe zwischen 0,7 und 70 µm, und noch besser zwischen 5 und 50 µm, besteht, kann in erster Linie eine gute Abriebfestigkeit erreicht werden. Wenn kleinere Partikel gewählt werden, wie etwa Partikel mit einer durchschnittlichen Größe zwischen 20 und 700 nm, und noch besser zwischen 50 und 200 nm, kann eine gute Kratzbeständigkeit erhalten werden. Die Erfinder haben festgestellt, dass, um einen akzeptablen Kompromiss zwischen Abriebfestigkeit und Kratzbeständigkeit zu erhalten, mit Bestandteilen in Form von Partikeln, die eine durchschnittliche Größe zwischen 5 und 20 µm aufweisen, gearbeitet werden kann. Mit dieser Partikelgröße kann auch eine akzeptable Transparenz erhalten werden, dies auch dank der guten Verbindung, die durch die Vermittlung des Celluloseträgers mit dem Harz entsteht.

Die zusammengesetzten Werkstoffteilchen können faserförmig oder partikelförmig sein. Welche Form der zusammengesetzte Werkstoff auch hat, im Durchschnitt weist er vorzugsweise eine maximale Abmessung zwischen 1 und 200 µm und noch besser zwischen 20 und 70 µm auf. Diese Abmessungen sind wünschenswert, wenn der Verlust an Transparenz der Deckschicht in Grenzen gehalten werden soll.

Es wird angemerkt, dass die Gegenwart von Cellulose, die vorzugsweise mehrere kleine keramische und/oder mineralische Partikel in einem größeren zusammengesetzten Werkstoffteilchen zusammenbringt, dafür sorgt, dass das erhaltene granulatförmige oder pulverförmige Material einfacher zu dosieren ist als die abriebfesten oder kratzbeständigen Materialpartikel für sich. So wird die Neigung solcher Materialpartikel, sich zusammenzuballen, stark reduziert. Dies ist beispielsweise bei mineralischen Partikeln mit einer durchschnittlichen Größe von weniger als 20 µm der Fall, und die erhaltene Verringerung wird sehr wichtig, wenn die durchschnittliche Größe der keramischen Partikel kleiner ist als 1 µm.

Die vorgenannte Deckschicht umfasst vorzugsweise außer den vorgenannten zusammengesetzten Werkstoffteilchen, das heißt zusammengesetzten Werkstofffasern oder zusammengesetzten Werkstoffpartikeln, auch andere Partikel, die wenigstens aus keramischem oder mineralischem Werkstoff bestehen, jedoch anders aufgebaut sind als die vorgenannten zusammengesetzten Werkstoffpartikel oder -fasern. Vorzugsweise befinden die anders aufgebauten Partikel sich an einer Position, wo sie sich über dem gedruckten Dekor, jedoch im Wesentlichen oder vollständig unter dem vorgenannten zusammengesetzten Werkstoff befinden. Diese anders aufgebauten Partikel können eine weitere Barriere für Abriebspuren, die sich bereits bis unter die zusammengesetzten Werkstoffteilchen fortgesetzt haben, bilden. Die vorgenannten Partikel können auf vielerlei Arten anders aufgebaut sein; so sind sie beispielsweise dadurch anders aufgebaut, dass sie eine oder mehr der nachfolgenden Eigenschaften aufweisen.

Erstens können die anders aufgebauten Partikel die Eigenschaft aufweisen, dass die durchschnittliche Größe des abriebfesten oder kratzbeständigen Bestandteils, dieser Partikel kleiner oder größer ist als dies bei den vorgenannten zusammengesetzten Werkstoffkörnern der Fall ist. Da die vorgenannte zweite Barriere sich vorzugsweise auf das Verzögern von Abrieb richtet, weisen die keramischen oder mineralischen Bestandteile dieser Partikel am besten eine durchschnittliche Größe auf, die größer ist als die durchschnittliche Größe der vorgenannten zusammengesetzten Werkstoffteilchen, oder zumindest doch wenigstens größer ist als die der keramischen oder mineralischen Bestandteile des zusammengesetzten Werkstoffteilchens.

Zweitens können die anders aufgebauten Partikel die Eigenschaft aufweisen, dass sie cellulosefrei sind. Das Risiko des Absinkens oder Ausbrechens dieser Partikel ist klein, da sie sich nicht an der Oberfläche der Deckschicht befinden. Daher ist es nicht erforderlich, dass sie einen Bestandteil auf Basis von Cellulose besitzen. Das Weglassen dieses Cellulosebestandteils kann eine gute Auswirkung auf die Transparenz der Deckschicht haben.

Drittens können die anders aufgebauten Partikel die Eigenschaft aufweisen, dass sie zu mehr als 90 Gew.-% aus abriebfestem oder kratzbeständigem Material bestehen, während die zusammengesetzten Partikel zu weniger als 90 Gew.-% aus abriebfestem oder kratzbeständigem Material bestehen.

Viertens können die anders aufgebauten Partikel die Eigenschaft aufweisen, dass der Großteil der Partikel ein anderes abriebfestes oder kratzbeständiges Material enthält als den vorgenannten zusammengesetzten Werkstoff.

Es ist deutlich, dass die vorgenannte zweite Barriere nicht unbedingt anhand cellulosefreier Partikel gebildet werden muss. Wenn auch hier mit zusammengesetzten Werkstoffteilchen gemäß dem ersten Aspekt gearbeitet wird, wird bevorzugt, dass die durchschnittliche Größe des abriebfesten oder kratzbeständigen Bestandteils größer ist als bei den zusammengesetzten Werkstoffteilchen, die sich über dieser zweiten Barriere befinden.

Die Deckschicht der Paneele gemäß einem weiteren Aspekt der Erfindung umfasst vorzugsweise wenigstens einen mit Harz versehenen Trägerbogen.

In einer ersten bevorzugten Ausführungsform umfasst das Paneel als Trägerbogen wenigstens ein sogenanntes Overlay, das vorzugsweise im Wesentlichen aus Alphacellulose besteht und/oder ein unbeharztes Gewicht zwischen 10 und 40 g/m², und noch besser zwischen 20 und 25 g/m², aufweist. Es ist nicht ausgeschlossen, dass in ein solches Overlay bereits bei der Produktion des Papiers harte Partikel, spezieller keramische oder mineralische Partikel, wie etwa Aluminiumoxid oder sogar der zusammengesetzte Werkstoff der Erfindung, integriert sind. Papierbögen, die bereits bei der Produktion mit keramischen Partikeln versehen werden, sind an sich bekannt, beispielsweise aus DE 196 04 907 oder DE 2 149 250. Es ist jedoch nicht bekannt, den zusammengesetzten Werkstoff der vorliegenden Erfindung bei einer solchen Produktion in einem Papierbogen vorzusehen.

In einer zweiten bevorzugten Ausführungsform umfasst das Paneel als Trägerbogen wenigstens eine sogenannte Dekorschicht, die einen Aufdruck oder eine Einfärbung aufweist, der bzw. die mindestens teilweise das vorgenannte Dekor bildet, wobei dieser Trägerbogen vorzugsweise ein Papierbogen ist, der ein unbeharztes Gewicht zwischen 55 und 100 oder sogar bis 150 g/m², und noch besser zwischen 70 und 90 g/m² aufweist. Die Dekorlagen mit einem unbeharzten Gewicht zwischen 100 und 150 g/m² werden bevorzugt bei Möbelpaneelen angewandt.

Es ist möglich, dass die vorgenannte erste und zweite Ausführungsform in ein und demselben Paneel kombiniert werden, wobei das vorgenannte Overlay sich dann vorzugsweise dichter bei der Oberfläche der Deckschicht befindet als die vorgenannte Dekorschicht.

Es ist deutlich, dass das Paneel des dritten Aspekts sowohl ein Fußbodenpaneel als auch ein Möbelpaneel oder gleich welches andere beschichtete Paneel, wie etwa ein Wand- oder Deckenpaneel, betreffen kann. Vorzugsweise ist das Paneel ein sogenanntes Laminatpaneel, dessen Deckschicht auf Basis einer DPL-Technik oder einer HPL-Technik hergestellt ist. Die Erfinder haben festgestellt, dass der Abrieb der bei diesen Techniken angewandten Presselementen infolge der in der Deckschicht vorhandenen abriebfesten oder kratzbeständigen Materialpartikel geringer ist als erwartet. Man vermutet, dass die Cellulose in dem zusammengesetzten Werkstoffkorn einen abschirmenden Einfluss auf den beispielsweise keramischen oder mineralischen Bestandteil ausübt, sodass dieser Bestandteil ein vermindertes Risiko aufweist, mit dem Presselement in Berührung zu kommen. Wenn die Deckschicht Harz enthält, kann die erfindungsgemäß erhaltene erhöhte Bindung des keramischen oder mineralischen Bestandteils in diesem Harz auch wenigstens teilweise für einen verminderten Verschleiß des Presselements verantwortlich gehalten werden.

Ein Verfahren zur Herstellung von Paneelen mit einem Substrat und einer Deckschicht mit wenigstens einem Dekor, in Form eines Aufdrucks und/oder einer Einfärbung, umfassenden Typs, wobei in der Deckschicht Partikel eingearbeitet werden, die sich über dem vorgenannten Dekor befinden, umfasst mindestens die Schritte des Zusammenstellens der vorgenannten Deckschicht mindestens auf Basis des Dekors und der Partikel und das Anbringen der Deckschicht auf dem vorgenannten Substrat, mit dem Merkmal, dass mindestens für einen Teil der vorgenannten Partikel erfindungsgemäße zusammengesetzte Werkstoffe angewendet werden.

Vorzugsweise werden die vorgenannten zusammengesetzten Werkstoffteilchen, dass heißt die zusammengesetzten Partikeln oder Fasern, in Form einer Suspension in die Deckschicht eingearbeitet, wobei diese Suspension vorzugsweise außer dem vorgenannten zusammengesetzten Werkstoff wenigstens Harz und Wasser enthält. Da eine Suspension mit zusammengesetzten Partikeln oder Fasern verwendet wird, kann erhalten werden, dass der beispielsweise keramische oder mineralische Werkstoff ein geringeres Risiko auf Absinken und/oder Migrieren aufweist, während die Auswirkung der Cellulose auf die Viskosität der Suspension eingeschränkt werden kann. Eine hohe Viskosität ist bei manchen Auftragtechniken, wie etwa bei Sprühtechniken, ungünstig. Es ist deutlich, dass die zusammengesetzten Werkstoffteilchen auch in der Deckschicht verarbeitet werden können, ohne eine Suspension anzuwenden. So können sie beispielsweise auf die Deckschicht oder ein Teil davon, wie etwa einen entweder bereits mit Harz versehenen oder nicht versehenen Trägerbogen, gestreut werden.

Für die Suspension kann beispielsweise ein in Wasser aufgelöstes Gemisch fester Stoffe gebraucht werden, wobei dieses Gemisch zu wenigstens 10 Gew.-% aus Feststoff, Harz und vorzugsweise zu wenigstens 50% aus den vorgenannten zusammengesetzten Werkstoffteilchen besteht. Die vorgenannte wässrige Lösung besteht vorzugsweise zu mindestens 30 Prozent, und noch besser zu mindestens 50 Prozent aus dem vorgenannten Gemisch fester Stoffe. Zum Anbringen der Suspension kann von mindestens einer der folgenden Möglichkeiten Gebrauch gemacht werden:
- einer Dosiereinrichtung;
- einer Aufstreicheinrichtung wenigstens anhand eines Messers;
- einer Auftrageinrichtung mit wenigstens einer Drahtrakelwalze und/oder einer Rasterwalze;
- einer Auftrageinrichtung mit wenigstens einem sogenannten Luftmesser;
- einer Auftrageinrichtung mit Hilfe von Walzen und Messern.

Es wird angemerkt, dass eine Sprühvorrichtung überraschenderweise auch mit gutem Ergebnis zum Anbringen der Suspension angewendet werden kann. Von einer solchen Sprühvorrichtung wird normalerweise erwartet, dass sie eine negative Auswirkung auf die Gleichförmigkeit der angebrachten Suspension hat, jedoch kann in diesem Fall diese Auswirkung durch die Anwendung zusammengesetzter Partikel oder Fasern begrenzt werden.

Weiter wird angemerkt, dass im Allgemeinen danach gestrebt wird, in der Deckschicht des Paneels eine Konzentration von zusammengesetzten Werkstoffteilchen von 5 bis 20 g/m² zu erhalten. Bei derartigen Konzentrationen können bereits akzeptable Verschleiß- und Kratzbeständigkeiten erhalten werden. Idealerweise wird, in Hinblick auf das Minimieren des Einflusses auf die Transparenz der Deckschicht, die Konzentration auf 5 bis 15 g/m² beschränkt. 10 g/m² ist beispielsweise ein guter Wert für die Konzentration der zusammengesetzten Werkstoffpartikel oder -fasern in der Deckschicht.

Vorzugsweise wird die vorgenannte Deckschicht anhand wenigstens eines Trägerbogens zusammengestellt. Ein solcher Trägerbogen, beispielsweise ein Papierbogen, kann in einem vorangehenden Schritt mit einer Harzmenge versehen werden, und zwar vorzugsweise an derjenigen Seite des Trägerbogens, die dazu gedacht ist, dessen Oberseite zu bilden. Diese Harzmenge kann dann die Oberseite des Paneels bilden oder kann dazu dienen, um darauf eine weitere Schicht, wie etwa eine Schicht mit zusammengesetzten Werkstoffteilchen, aufzubringen. Vorzugsweise wird die vorgenannte Harzmenge hierbei dosiert aufgebracht, z.B. durch Verwendung von Dosierwalzen. Jedoch kann auch, optional in Kombination mit der vorgenannten Dosiervorrichtung, Harz mittels einer Sprühvorrichtung aufgetragen werden.

Es kann die vorgenannte Suspension dann auf dem mit Harz versehenen Trägerbogen, vorzugsweise an dessen Oberseite, aufgebracht werden und kann für das Anbringen der vorgenannten Suspension von einer Auftrageinrichtung Gebrauch gemacht werden, die sich in einer Produktionslinie mit einer Einrichtung befindet, welche zum Beharzen des Trägerbogens in dem vorgenannten vorangehenden Schritt angewendet wird. Hierzu kann auf einem Standardimprägnierkanal eine extra Station vorgesehen werden. Vorzugsweise befindet die vorgenannte Auftrageinrichtung sich, in Durchlaufrichtung des Trägerbogens gesehen, hinter einer Trockenstation bzw. einem Ofen. Noch besser befindet sich, in Durchlaufrichtung des Trägerbogens, hinter der vorgenannten Auftrageinrichtung, von der für das Auftragen der Suspension Gebrauch gemacht wird, auch eine zweite Trockenstation. Zwischen beiden Trockenstationen oder Öfen kann dann wenigstens ein Teil und vorzugsweise die ganze vorgenannte Suspension auf dem Trägerbogen angebracht werden. So wird erreicht, dass der Restfeuchtigkeitsgehalt des vorgenannten Trägerbogens mittels der ersten Trockeninstallation beschränkt wird, bevor die Suspension angebracht wird, und dass, nachdem die Suspension angebracht ist, der Trägerbogen in der zweiten Trockeninstallation weiter getrocknet werden kann. Das Einführen einer Trocknung vor dem Anbringen der Suspension senkt das Risiko des Absinkens der zusammengesetzten Werkstoffteilchen weiter. Wie der vorgenannte Trägerbogen oder Teil auch angefertigt wird und wie die vorgenannte Substanz auch darauf angebracht wird, wird es bevorzugt, dass dieser Trägerbogen beim Zusammenstellen der Deckschicht einen Restfeuchtigkeitsgehalt von maximal 10% und noch besser von maximal 7% aufweist. Gemäß einer Verfahrensvariante kann dieser zweite Trockenschritt auch auf einer anderen Produktionslinie oder getrennt ausgeführt werden.

Gemäß einer ersten Möglichkeit kann der vorgenannte Trägerbogen dieser wichtigen Ausführungsform ein sogenanntes Overlay betreffen, das sich in dem Paneel als eine wenigstens teilweise transparente oder durchscheinende Schicht über dem Dekor befindet. Dieses Overlay kann aus Alphacellulose bestehen und unbeharzt ein Gewicht zwischen 10 und 40 g/m² und noch besser zwischen 20 und 25 g/m² aufweisen. In diesem Fall weist der mit Harz versehene Trägerbogen beim Zusammenstellen der Deckschicht, in trockenem Zustand, das heißt, einem Zustand, wobei der Restfeuchtigkeitsgehalt ungefähr 6% beträgt, vorzugsweise ein Gewicht zwischen 100 und 180 g/m², und noch besser zwischen 125 und 155 g/m² auf, einschließlich der eventuell angebrachten Suspension. Auf diese Weise wird erhalten, dass der Trägerbogen vollständig durchtränkt, jedoch nicht übersättigt ist, und dass eine gute Haftung sowohl mit den zusammengesetzten Werkstoffteilchen als auch mit darunterliegenden Schichten, wie etwa einer eventuellen Basisplatte im Fall einer DPL-Technik, erreicht werden kann.

Gemäß einer besonderen Möglichkeit betrifft der Trägerbogen ein sogenanntes Overlay, wobei dieses Overlay im Wesentlichen aus einem Alphacellulosepapier besteht, worin bei der Produktion des Papiers abriebfeste und/oder kratzbeständige Partikel, wie etwa Aluminiumoxid, integriert worden sind. Auch in diesem Fall wird am besten mit den oben beschriebenen Harzmengen gearbeitet. Es ist deutlich, dass die Anwendung eines solchen Trägerbogens eine gute Abriebfestigkeit ergibt.

Gemäß einer zweiten Möglichkeit der vorgenannten besonderen Ausführungsform weist der vorgenannte Trägerbogen einen Aufdruck oder eine Einfärbung auf, der bzw. die das vorgenannte Dekor bildet. Vorzugsweise betrifft dies ein Dekorpapier, das vorzugsweise, unbeharzt, ein Gewicht zwischen 55 und 100 oder sogar bis zu 150 g/m², und noch besser zwischen 70 und 90 g/m² aufweist. Damit der Trägerbogen vollständig durchtränkt, jedoch auch nicht übersättigt ist, weist der beharzte Trägerbogen beim Zusammenstellen der Deckschicht vorzugsweise ein Gewicht von 120 bis 200 g/m² und noch besser von 130 bis 170 g/m² auf, einschließlich der eventuell aufgebrachten Suspension.

Es ist nicht ausgeschlossen, dass bei der Herstellung des Paneels wenigstens für einen Teil der vorgenannten Partikel auch Partikel angewendet werden, die anders aufgebaut sind als die vorgenannten zusammengesetzten Werkstoffteilchen, wobei vorzugsweise die anders aufgebauten Partikel in der Deckschicht an einer Stelle verarbeitet werden, wo sie sich in dem letztendlichen Paneel über dem Dekor, jedoch im Wesentlichen oder vollständig unter den vorgenannten zusammengesetzten Werkstoffteilchen befinden. Diese anders aufgebauten Partikel können auf gleich welche Weise in die Deckschicht eingearbeitet werden. So können sie gegebenenfalls während des vorgenannten vorangehenden Schritts auf dem Trägerbogen angebracht werden. Vorzugsweise werden diese anders aufgebauten Partikel an der Seite des Trägerbogens aufgetragen, die dazu gedacht ist, dessen Unterseite zu bilden. Sie können jedoch auch mittels eines getrennten, entweder mit Harz versehenen oder nicht versehenen Trägerbogens in die Deckschicht eingearbeitet werden. Vorzugsweise befinden diese anders aufgebauten Partikel sich in dem Paneel in einer Harzschicht, jedoch können sie auch in einen Trägerbogen eingearbeitet sein. Im Fall eines Trägerbogens aus Papier bedeutet das, dass die Partikel in das Papier selbst aufgenommen sind.

Der Schritt des Zusammenstellens der Deckschicht und des Anbringens dieser Deckschicht auf dem Substrat kann mittels eines Presselements durchgeführt werden, wie dies bei einer DPL- oder HPL-Technik der Fall ist. Wie bereits beschrieben, hat die Anwendung der vorgenannten zusammengesetzten Werkstoffteilchen günstige Auswirkungen auf den Verschleiß des hierbei angewendeten Presselements. Es wird angemerkt, dass bei einer DPL-Technik der Schritt des Zusammenstellens und Anbringens der Deckschicht in einer einzigen Pressbearbeitung stattfinden kann.

Als Harz wird vorzugsweise ein thermoaushärtendes Aminoharz, wie etwa ein Melaminharz, angewendet. Es ist jedoch nicht ausgeschlossen, dass wenigstens für die Suspension ein thermoplastisches Harz benutzt wird.

In der vorgenannten Suspension können weiter noch an sich bekannte Dispergiermittel angewendet werden, die das in Suspension Halten des zusammengesetzten Werkstoffs weiter fördern. Andere mögliche Bestandteile für die Suspension sind Silan, Butandiol, Epsilon-Caprolactam, Polyglykolen und dergleichen. Diese Mittel sind an sich als Modifikatoren für Aminoharze bekannt. Es wird angemerkt, dass die zusammengesetzten Werkstoffpartikel oder -fasern in einem Wasser-Harz-Gemisch dispergiert werden können, ohne zusätzliche Dispergiermittel zu gebrauchen. Das Vorhandensein von Cellulose in dem zusammengesetzten Werkstoff kann sowieso bereits erheblich zu dem in der Schwebe Halten der zusammengesetzten Partikel oder Fasern beitragen.

Weiter betrifft die Erfindung auch einen Papierbogen, der zur Herstellung eines Laminatpaneels verwendet werden kann, mit dem Merkmal, dass dieser Papierbogen eine erfindungsgemäße Zusammensetzung aufweist. Vorzugsweise weist ein solcher Papierbogen auch eine Beharzung auf und vorzugsweise weist er auch die in der Einleitung angegebenen Gewichte unbeharzten und beharzten Papiers auf.

Mit der Absicht, die Merkmale der Erfindung zu verdeutlichen, sind hiernach, als Beispiel ohne jeden einschränkenden Charakter, einige bevorzugte Ausführungsformen und 3 Ausführungsbeispiele beschrieben, unter Verweis auf die begleitenden Zeichnungen, worin:
Figur 1 schematisch ein zusammengesetztes Werkstoffteilchen gemäß der Erfindung darstellt;
Figur 2 eine Variante des zusammengesetzten Werkstoffs von Figur 1 darstellt;
Figur 3 den zusammengesetzten Werkstoff von Figur 2 in einem Querschnitt gemäß Linie III-III darstellt; die
Figuren 4 und 5 Varianten des zusammengesetzten Werkstoffs in einer Ansicht gleichartig der von Figur 3 darstellen;
Figur 6 schematisch ein Verfahren zur Herstellung eines erfindungsgemäßen zusammengesetzten Werkstoffs darstellt;
Figur 7 schematisch ein Verfahren zur Herstellung von Paneelen darstellt;
Figur 8 eine Variante eines solchen Verfahrens für das in Figur 7 mit F8 angedeutete Gebiet darstellt; die
Figuren 9 und 10 einen Querschnitt durch die Deckschicht eines mit einem solchen Verfahren hergestellten Paneels darstellen, wobei Figur 10 in größerem Maßstab eine Ansicht auf das in Figur 9 mit F10 angedeutete Gebiet darstellt; die
Figuren 11 bis 15 stellen weitere Beispiele von solchen Paneelen dar; die
Figuren 16 und 17 stellen den Zerfall im Ultraschallbad des zusammengesetzten Werkstoffs gemäß dem ersten Ausführungsbeispiel beziehungsweise dem dritten Ausführungsbeispiel dar;
Figur 18 zeigt ein rasterelektronisches Bild eines faserförmigen zusammengesetzten Werkstoffs gemäß dem ersten Ausführungsbeispiel;
Figur 19 zeigt ein rasterelektronisches Bild von partikelförmigem zusammengesetztem Werkstoff gemäß dem zweiten Ausführungsbeispiel;
Figur 20 macht die Verteilung von Aluminiumoxid und Siliciumdioxid auf der Celluloseoberfläche für ein Korn des zusammengesetzten Werkstoffs des zweiten Ausführungsbeispiels sichtbar;
Figur 21 stellt noch ein rasterelektronisches Bild von einigen Körnern des zusammengesetzten Werkstoffs des zweiten Ausführungsbeispiels dar;
Figur 22 zeigt schematisch eine Anlage zum elektrostatischen Beschichten.

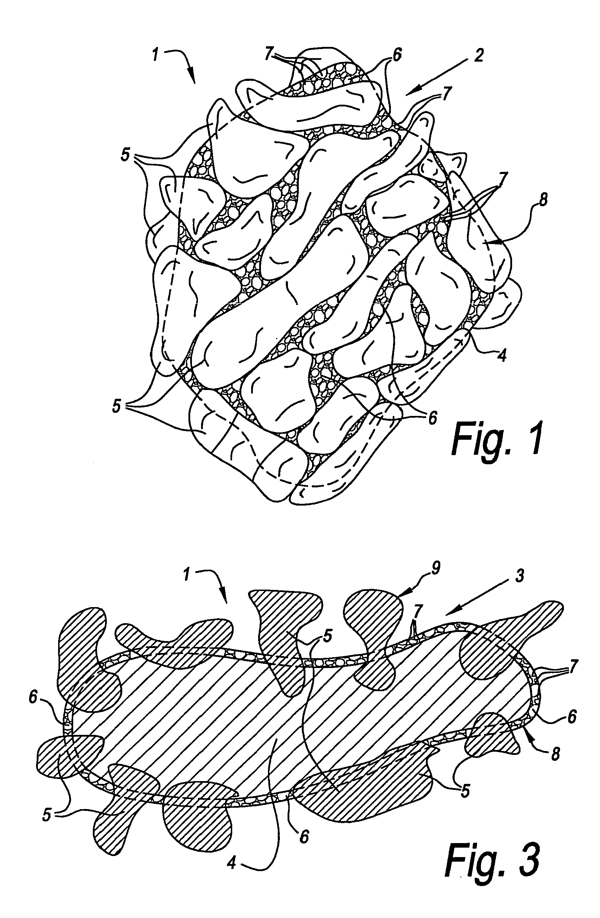

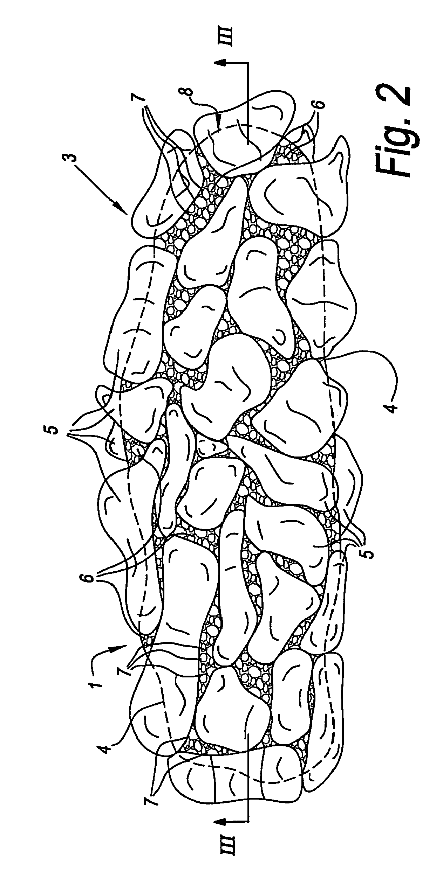

Figur 1 stellt schematisch einen zusammengesetzten Werkstoff 1 mit den Merkmalen der Erfindung dar. Das Beispiel von Figur 1 betrifft ein partikelförmiges zusammengesetztes Werkstoffteilchen 2. Als Variante ist in Figur 2 ein faserförmiges zusammengesetztes Werkstoffteilchen 3 dargestellt. Wie aus den Figuren 1 und 2 deutlich hervorgeht, besteht der zusammengesetzte Werkstoff 1 der Erfindung mindestens aus einem Celluloseträger 4, auf dem mindestens ein Material 5 mit abriebfesten und/oder kratzbeständigen Eigenschaften, in diesem Fall ein Mineral 5, fixiert ist. Für das vorgenannte Mineral 5 ist in den Figuren Aluminiumoxid gebraucht worden.

Der zusammengesetzte Werkstoff 1 der Figuren 1 und 2 umfasst auch getrennte Fixiermittel 6 zum Fixieren des vorgenannten Minerals 5 oder der Korundpartikel auf dem vorgenannten Celluloseträger 4. In dem Beispiel bestehen die getrennten Fixiermittel 6 aus nanoskaligen Partikeln 7, die aus einer nanoskaligen kolloidalen Lösung oder Dispersion erhalten worden sind. Als Feststoff oder als nanoskalige Partikel 7 in der Dispersion oder Lösung sind Metalloxidpartikel, spezieller Siliciumoxid-partikel, angewendet. Wie in der Einleitung erwähnt, besitzen die vorgenannten nanoskaligen Partikel 7 bevorzugt, so wie hier, eine spezifische BET-Oberfläche von 1700 m²/g bis 10 m²/g. Aus den Figuren geht hervor, dass die Partikel des abriebfesten oder kratzbeständigen Materials 5 sich in diesem Fall mindestens um eine Größenordnung, mit anderen Worten um einen Faktor Zehn, in den Abmessungen von den nanoskaligen Partikeln 7 unterscheiden.

Wie Figur 3 beispielhaft wiedergibt, kann der Celluloseträger 4 anhand dieser Lösung oder Dispersion mit nanoskaligen Partikeln 7 besetzt werden, wobei optional hohe Besetzungsgrade erzielt werden können. In dem Beispiel ist der Celluloseträger 4 zu mehr als 70 % seiner Oberfläche mit nanoskaligen Partikeln 7 belegt; somit sind die vorgenannten nanoskaligen Partikel 7 als eine Schicht 8 auf der Oberfläche des Celluloseträgers 4 vorhanden.

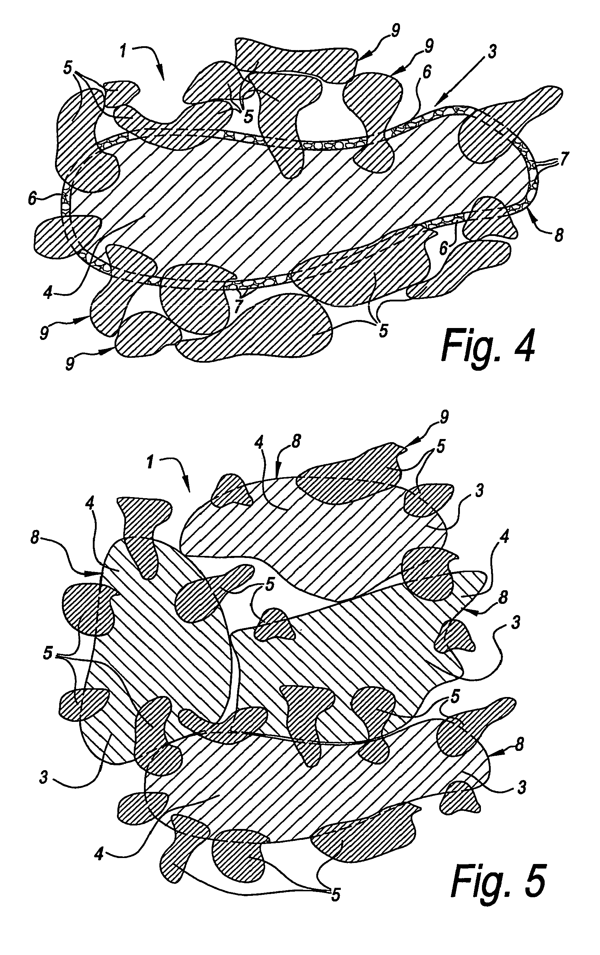

Figur 4 stellt ein Beispiel eines faserförmigen zusammengesetzten Werkstoffs 3 dar, wobei mehrere Partikelschichten 9 des abriebfesten oder kratzbeständigen Materials 5 übereinander angeordnet sind.

Figur 5 stellt ein Beispiel dar, wobei mehrere Partikel 3 des zusammengesetzten Werkstoffs 1 verbunden sind.

Bevorzugt werden, um eine gute mechanische Stabilität zu erreichen, die Varianten von Figur 4 und 5 nach Möglichkeit vermieden. Wenn der zusammengesetzte Werkstoff als Pulver oder Granulat angeboten wird, ist der Anteil dieser Varianten bevorzugt auf ein Maximum von 10 Vol-%, oder noch besser auf ein Maximum von 5 oder 3 Vol.-% beschränkt.

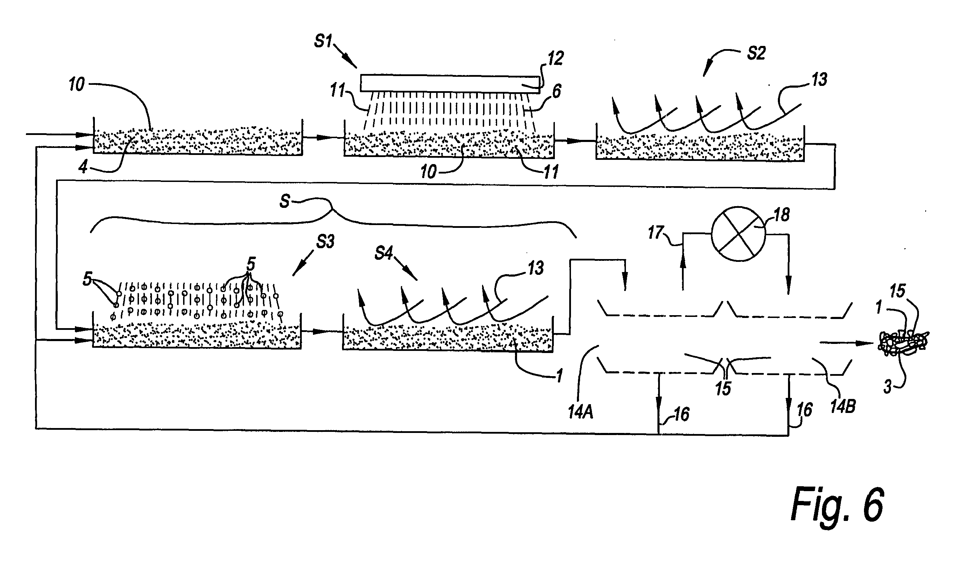

Figur 6 stellt schematisch ein Verfahren zur Herstellung eines zusammengesetzten Werkstoffs 1 gemäß der Erfindung dar. Hierbei wird von Cellulosematerial 10, wie etwa Cellulosefasern oder mikrokristalliner Cellulose oder anderem Material auf Cellulosebasis, ausgegangen. Zum Erhalten der erfindungsgemäß vorliegenden Bindung oder Fixierung eines abriebfesten oder kratzbeständigen Materials 5 an der Oberfläche eines Celluloseträgers 4 werden, in diesem Fall in einem ersten Schritt S1, der dem Schritt S des tatsächlichen Fixierens des vorgenannten Minerals 5 auf dem Celluloseträger 4, als Binde- und oder Funktionsmittel 11 nanoskalige Lösungen oder Dispersionen verwendet. Hierzu werden die vorgenannten nanoskaligen Lösungen oder Dispersionen mit dem Cellulosematerial 10 in Kontakt gebracht, in diesem Fall daraufgesprüht. Hierbei kann dieses Cellulosematerial 10 optional fortlaufend und/oder kontinuierlich umgewälzt werden. Für das Sprühen können an sich bekannte Düsensysteme 12 angewendet werden.

Nach dem vorgenannten ersten Schritt S1 wird in einem darauffolgenden zweiten Schritt S2 die nanoskalige Lösung oder Dispersion auf der Celluloseoberfläche angetrocknet. Dies kann beispielsweise, wie dargestellt, anhand einer Lufttrocknung 13, beispielsweise mittels eines Ofens, stattfinden. Die in diesem zweiten Schritt S2 ausgeführte Antrocknung führt vorzugsweise zu einem Zustand, worin an der Oberfläche des vorgenannten Cellulosematerials 10 des Trägers 4 nanoskalige Partikel 7 vorhanden sind und wobei in diesem Zustand eine gewisse Bindekraft an der Oberfläche der mit nanoskaligen Partikeln 7 beschichtete Celluloseoberfläche vorhanden ist, so dass, wie vorangehend erwähnt, bevorzugt die Partikel des vorgenannten abriebfesten oder kratzbeständigen Materials 5 ohne weitere Additive oder Verfahrensschritte mittels der vorgenannten nanoskaligen Partikel 7 an das Cellulosematerial 10 fixiert werden können.

Ein dritter, in Figur 6 dargestellter Schritt S3 betrifft das Zusetzen der Partikel des vorgenannten abriebfesten oder kratzbeständigen Materials 5 zu dem mit Nanopartikeln behandelten Cellulosematerial 10. Dieses Zusetzen kann auf verschiedene Art und Weise stattfinden, beispielsweise durch das Einblasen der abriebfesten und/oder kratzbeständigen Materialpartikel 5.

In einem vierten Schritt S4 kann dann optional eine Trocknung, wie etwa eine Lufttrocknung 13, der erhaltenen zusammengesetzten Werkstoffkörner 2-3 durchgeführt werden.

Die tatsächliche Fixierung, Schritt S, der Mineralpartikel 5 kann sowohl während des Zusetzens der abriebfesten oder kratzbeständigen Materialpartikel, das heißt, in dem vorgenannten dritten Schritt S3, als während der darauffolgenden Trocknung 13 in Schritt S4 stattfinden.

Wie dargestellt, werden die Körner 2-3 des zusammengesetzten Werkstoffs anschließend bevorzugt in das gewünschte Korngrößenspektrum gebracht. Das kann beispielsweise, wie hier dargestellt, durch Absiebung mit einem oder mehreren Doppeldeck-Langsieben 14A-14B erzeugt werden. In diesem Fall werden zwei Doppeldeck-Langsiebe 14A-14B angewendet.

Bei Anwendung des ersten Doppeldeck-Langsiebs 14A können zusammengesetzte Werkstoffteilchen 2-3 mit einer geeigneten Größe, sogenanntes Nutzkorn 15, von zu kleinen und zu großen Werkstoffteilchen, sogenanntem Feinkorn beziehungsweise Überkorn, getrennt werden, welche jeweils mit den Pfeilen 16 und 17 schematisch dargestellt sind. Feinkörner 16 können sofort der darauf folgenden Charge an verschiedenen Stellen in dem Verfahren beigemischt werden, beispielsweise als Ausgangsmaterial. Die erhaltenen Werkstoffkörner, die zu große Abmessungen aufweisen, oder das sogenannte Überkorn 17, können eventuell über eine Mühle 18, beispielsweise eine Schlagnasenmühle, zerkleinert werden, sodass ein hoher Anteil Nutzkorn 15 bei nachfolgender Siebung mit dem zweiten Doppeldeck-Langsieb 14B erhalten werden kann.

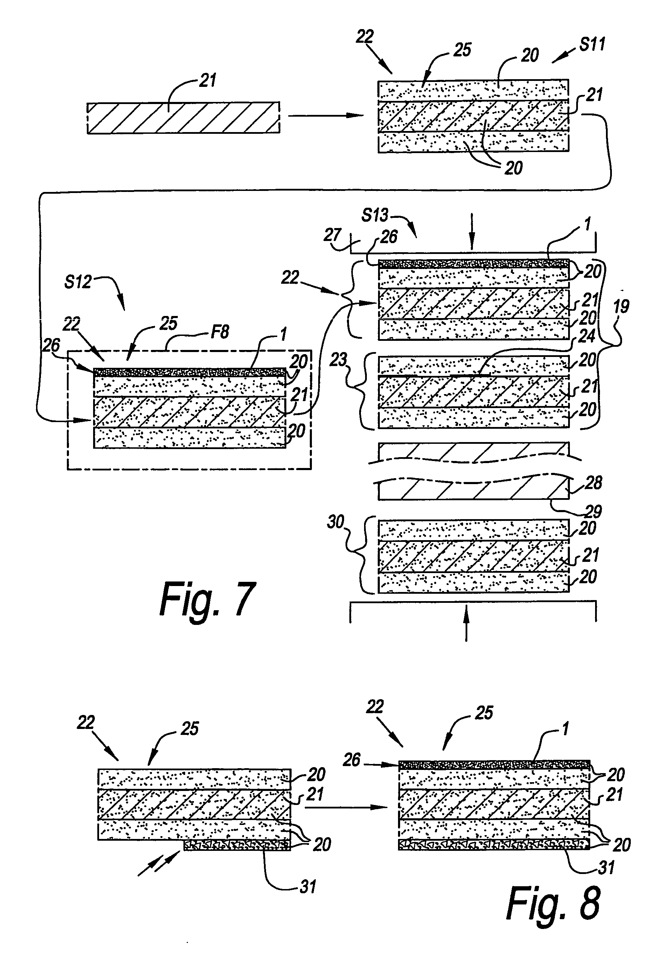

Figur 7 stellt verschiedene Schritte in einem Verfahren zur Herstellung eines Paneels dar. In dem Beispiel betrifft dies ein Laminatpaneel mit einer Deckschicht 19, die unter anderem aus zwei in Harz 20 getränkten Trägerbögen 21 zusammengestellt ist. Ein erster mit Harz 20 versehener Trägerbogen 21 bildet ein sogenanntes Overlay 22 und ist dazu gedacht, in dem Beispiel die Oberseite des herzustellenden Paneels zu bilden. Dieses Overlay 22 erstreckt sich über einen zweiten Trägerbogen 21, der mit Harz 20 versehen eine Dekorschicht 23, auch Dekorpapier genannt, bildet. Zu diesem Zweck weist der zweite Trägerbogen 21 einen Aufdruck 24 auf, der das vorgenannte Dekor bildet.

Figur 7 zeigt deutlich, dass der erste Trägerbogen 21, der zur Bildung des Overlays 22 gedacht ist, in einem ersten vorangehenden Schritt S11 mit Harz 20 versehen wird, so dass dieser Trägerbogen 21 wenigstens an seiner Oberseite 25 eine gewisse Menge Harz 20 aufweist. In diesem Fall wurde der Trägerbogen 21 völlig mit Harz 20 gesättigt und weist auch an seiner Unterseite eine gewisse Menge Harz 20 auf. In einem zweiten Schritt S12 wird an der Oberseite 25 des bereits beharzten ersten Trägerbogens 21 oder Overlays 22 eine Dispersion 26 aufgebracht, welche den zusammengesetzten Werkstoff 1 der Erfindung enthält. Die Suspension 26 kann hierbei auf beliebige Weise aufgebracht werden, beispielsweise gemäß den in der Einleitung beschriebenen Techniken.

Für das Formen des Laminatpaneels wird in dem Beispiel von Figur 7 die in der Einleitung angeführte DPL-Technik angewendet, wobei, wie in Schritt S13 wiedergegeben, das vorgenannte, in diesem Fall bereits mit einer Suspension 26 versehene Overlay 22 und die vorgenannte Dekorschicht 23 zu der Deckschicht 19 zusammengestellt werden und gleichzeitig mit Hilfe eines Presselements 27 auf einer Basisplatte 28 oder auf Substrat verfestigt werden. In diesem Fall wird an der Unterseite 29 der Basisplatte 28, die beispielsweise aus einer MDF- oder HDF-Platte bestehen kann, ebenfalls ein in Harz 20 getränkter Trägerbogen 21 angebracht, der eine sogenannte Ausgleichsschicht oder Gegenzug 30 bildet.

Es wird angemerkt, dass in Schritt S13 vorzugsweise relativ große Platten geformt werden, die anschließend zu kleineren Paneelen versägt werden können, woran, im Fall von Fußbodenpaneelen, zur Bildung der eigentlichen Fußbodenpaneele, Koppelmittel an deren Rändern vorgesehen werden können oder woran im Fall anderer verkleideter Paneele andere Kantenbearbeitungen vorgesehen werden können. Fußbodenpaneele mit Koppelmitteln sind an sich beispielsweise aus WO 97/47834 bekannt. Kantenfertigstellung für Möbelpaneele kann beispielsweise aus dem Anbringen dekorativer Lagen an diesen Kanten bestehen.

Es ist deutlich, dass mit dem hier dargestellten Verfahren Paneele erhalten werden, die an ihrer Oberseite abriebfeste oder kratzbeständige Bestandteile umfassen, die mittels des vorgenannten zusammengesetzten Werkstoffs 1 in der Deckschicht 19 vorgesehen sind.

Es wird angemerkt, dass es gemäß einer nicht dargestellten Variante nicht ausgeschlossen ist, den zusammengesetzten Werkstoff 1 mittels der Suspension anzubringen, nachdem die verschiedenen Schichten bereits mit Hilfe des Presselements 27 verfestigt oder zusammengestellt sind.

Figur 8 stellt dar, dass einer Variante gemäß auch an der Unterseite des ersten Trägerbogens 21 oder Overlays 22, beispielsweise keramische of mineralische, Partikel 31 angebracht werden können. Diese können auch mit Hilfe einer Harzsuspension angebracht werden und sind, wie schematisch dargestellt, vorzugsweise anders aufgebaut als die abriebfesten oder kratzbeständigen Materialpartikel 5 des zusammengesetzten Werkstoffs 1.

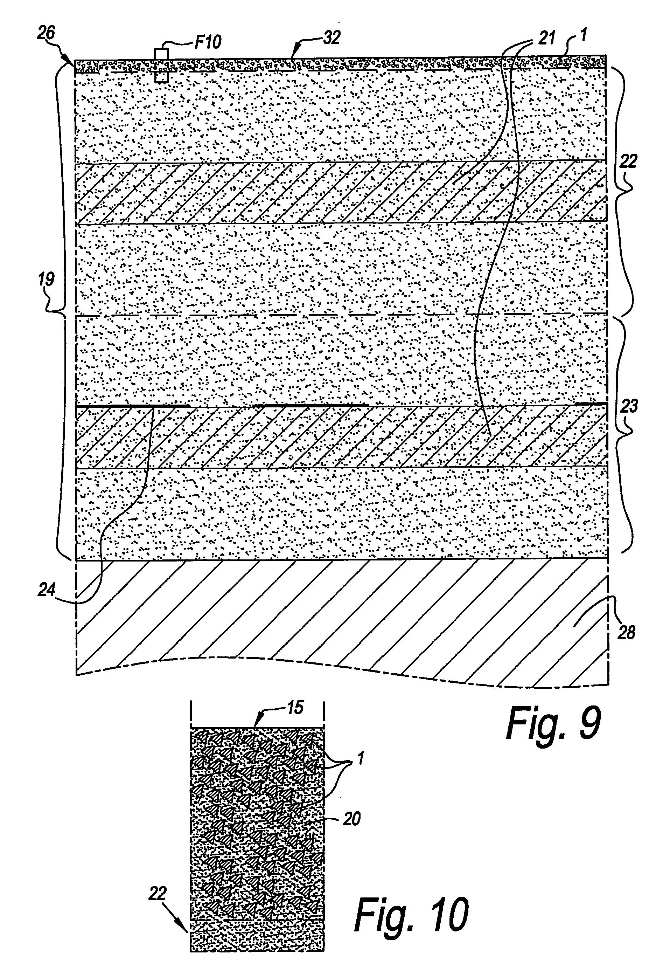

Figur 9 stellt einen Querschnitt durch die Deckschicht 19 des mit dem Verfahren von Figur 7 erhaltenen Laminatpaneels dar. Bei diesem Laminatpaneel wird die Oberfläche 32 der Deckschicht 19 durch die in der Suspension 8 angebrachten zusammengesetzten Werkstoffe 1 gebildet. Figur 10 stellt dar, dass besonders hohe Konzentrationen der zusammengesetzten Werkstoffe 1 an der Oberfläche 32 eines Laminatpaneels erreicht werden können, die sich direkt bei der Oberseite des Laminatpaneels, beispielsweise Fußbodenpaneels, befinden und dadurch besonders effektiv sind. Es wird nochmals angemerkt, dass eine gute Wirkung des zusammengesetzten Werkstoffs 1 bereits bei einer Konzentration zwischen 5 und 20 g/m² erzielt werden kann.

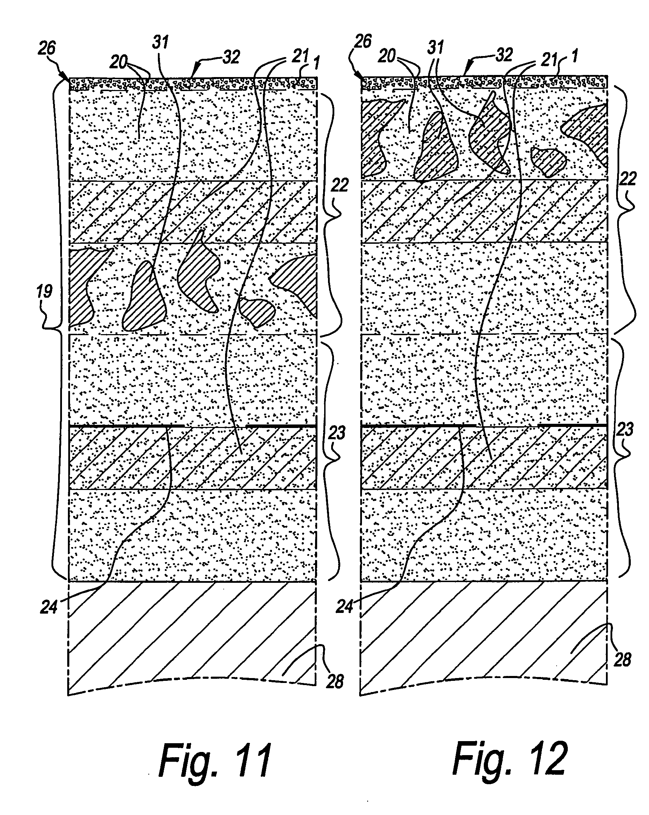

Figur 11 gibt das Resultat wieder, das mit dem Verfahren von Figur 7 erhalten werden kann. Es ist deutlich, dass beim Verpressen der jeweiligen Trägerbögen 21 eine eventuelle Migration des zusammengesetzten Werkstoffs 1 und/oder der anders aufgebauten Partikel 31 und/oder des angewendeten Harzes 20 auftreten kann. Figur 11 stellt beispielsweise dar, dass das Harz 20 an der Unterseite des Trägerbogens 21 des Overlays 22 und das Harz 20, womit die Partikel 31 angebracht sind, eine einzige Schicht bilden, worin die Partikel 31 sich verteilen. Eine eventuelle Migration des zusammengesetzten Werkstoffs 1 zu der darunterliegenden Struktur kann dadurch eingeschränkt werden, dass die vorgenannte Suspension 26 erst dann angebracht wird, nachdem der in dem vorangehenden Schritt S11 beharzte Trägerbogen 21 hinreichend getrocknet ist.

Figur 12 stellt noch eine Variante dar, wobei anders aufgebaute Partikel 31 über dem Trägerbogen 21 des Overlays 22 vorhanden sind, wobei jedoch die Oberfläche 32 des Laminatpaneels noch stets im Wesentlichen durch die vorgenannten, in Harz eingefassten zusammengesetzten Werkstoffkörner 2-3, dass heißt Werkstoffpartikel 2 und/oder Werkstofffasern 3, gebildet wird.

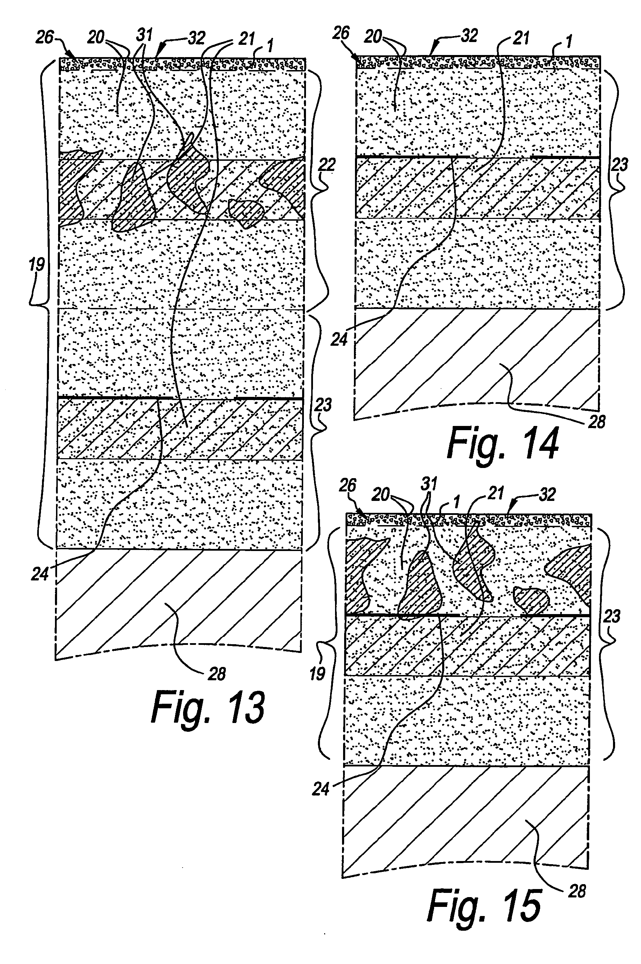

Figur 13 stellt eine Variante dar, wobei in dem Trägerbogen 21 selbst des Oberlays 22 anders aufgebaute Partikel 32 vorhanden sind. Das kann beispielsweise erreicht werden, wenn ein Trägerbogen 21 angewendet wird, wobei bei dessen Produktion, beispielsweise der Produktion des Papiers, woraus dieser Trägerbogen 3 besteht, abriebfeste oder kratzbeständige Partikel 32, wie etwa Aluminiumoxid oder andere Metalloxide oder Metallcarbide, in dieses integriert werden.

Figur 14 stellt eine Variante eines Laminatpaneels dar, wobei die Deckschicht 19 über dem Aufdruck 24 oder dem Dekor keine zusätzlichen Trägerbögen 21, wie etwa ein Overlay 22, umfasst. Figur 15 stellt auch eine derartige Variante dar, wobei außer den in Suspension 26 angebrachten zusammengesetzten Werkstoff 1 auch anders aufgebaute Partikel 32 über dem Dekor vorgesehen sind, die sich jedoch im Wesentlichen unter dem zusammengesetzten Werkstoff 1 befinden.

Die anders aufgebauten Partikel 32 im Beispiel der Figuren 11, 12, 13 und 15 sind schematisch größer wiedergegeben als der zusammengesetzte Werkstoff 1. Es wird angemerkt, dass dies nicht unbedingt der Realität entsprechen muss und dass die anders aufgebauten Partikel 32 auch kleiner als oder gleich groß wie der zusammengesetzte Werkstoff 1 sein können. Wie in der Einleitung ausgeführt, können sie auf vielerlei Art anders aufgebaut sein als der zusammengesetzte Werkstoff 1 und müssen sie sich nicht unbedingt in der Grö-ße unterscheiden. Vorzugsweise haben die anders aufgebauten Partikel 32 eine durchschnittliche Größe zwischen 20 und 200 µm, und noch besser zwischen 60 und 160 µm, während die vorgenannten abriebfesten oder kratzbeständigen Materialpartikel 5 des zusammengesetzten Werkstoffs 1 vorzugsweise eine Größe zwischen 5 und 20 µm haben.

Angemerkt wird, dass die Trägerbögen 21 in den dargestellten Beispielen lediglich schematisch abgebildet sind und dass in Wirklichkeit das Verhältnis zwischen der Dicke solcher Trägerbogen 21 und der Gesamtdicke der Deckschicht 19 von dem in den Figuren angewendeten Verhältnis abweichen kann. Das gleiche gilt für die dargestellten Abmessungen der Partikel 1 und 32. Für nicht einschränkende Beispiele praktischer Abmessungen der Partikel 1 und 32 wird auf die Beschreibung in der Einleitung verwiesen.

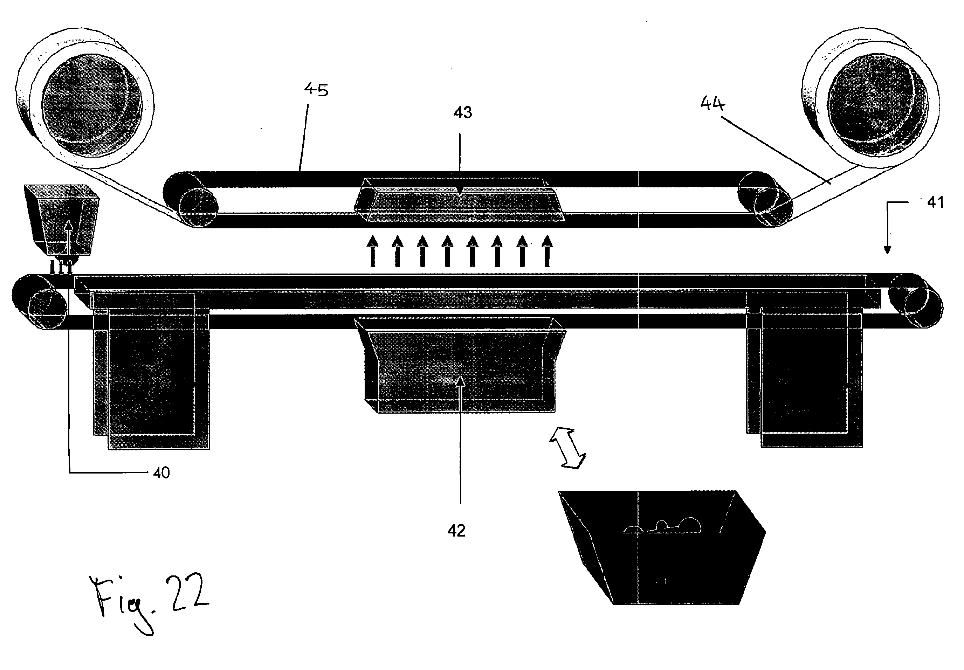

Fig. 22 zeigt schematisch eine Anlage zum elektrostatischen Beschichten.

Aus einem Vorratsbehälter 40 wird erfindungsgemäßer zusammengesetzter Werkstoff auf ein Streuband 41 aufgestreut. Das Streuband durchläuft einen Bereich, in dem unterhalb dieses Streubandes eine Hochspannungselektrode 42 und oberhalb eine Gegenelektrode 43 angeordnet ist. Zwischen Streuband 41 und Gegenelektrode 43 wird der zu beschichtende Träger 44 mittels eines Führungsbandes 45 geführt.

Durch das elektrische Feld zwischen den beiden Elektroden 42, 43 wird der Werkstoff vom Streuband auf den Träger transportiert und beschichtet diesen.

Mit der Absicht, die Erfindung noch weiter zu veranschaulichen, sind hier nachstehend, ohne jeden einschränkenden Charakter, noch einige Ausführungsbeispiele von zusammengesetzten Werkstoffen mit den Merkmalen der Erfindung aufgenommen.

### Ausführungsbeispiel 1:

Das erste Ausführungsbeispiel betrifft ein Beispiel der Herstellung faserförmigen zusammengesetzten Werkstoffs.

20 kg natürliche Cellulosefasern ARBOCEL (Fa. J.Rettenmaier & Söhne GmbH+CO.KG) Typ BE600-10TG mit einem Celluloseinhalt von 99,5 %, einer mittleren Faserlänge von 18 µm, einer durchschnittlichen Faserdicke von 15 µm und einem Sieb-rückstand (Luftstrahlsieb) von maximal 2 % auf dem 32 µm-Sieb, einem Schüttgewicht von 240 g/l bis 300 g/l wurden aufgelockert. Die Cellulosefasern wurden mit 24 l Köstrosol 1530 (Chemiewerk Bad Köstritz GmbH) befeuchtet.

Diese Lösung aus synthetisch hergestellten, amorphen kolloidalen Siliciumdioxid-Partikeln mit einer spezifischen Oberfläche von 170 m²/g, einem Feststoffanteil von 29,6 % und einer Viskosität von 4,5 Pas wird mit 1 1/min dosiert und mit Hilfe eines Düsensystems gleich verteilt auf die Cellulose gesprüht.

Nach Abschluss der Köstrosolzugabe wurde 15 min vorgetrocknet.

Im nächsten Verfahrensschritt wurden im Verlauf von 15 min 8 kg Edelkorund-silanisiert mit einem D50-Wert von 9,8 µm zugeführt. Nach etwa 10 min waren die Edelkorundpartikel gebunden. Bei einer Raumtemperatur von 21°C und einer relativen Luftfeuchte von 53 % wurden die zusammengesetzten Werkstoffkörner, in diesem Fall Fasern, 5 Stunden an der Luft getrocknet und erhalten dabei ihre Stabilität. Das fertige Produkt wurde noch in seinem Kornspektrum mit einer Siebbespannung von 75 µm und 42 µm eingegrenzt. Im Nutzbereich 42-75 µm lagen 71 % der zusammengesetzten Werkstofffasern, 8 % waren kleiner als 42 µm und 21 % größer als 75 µm. Der Anteil größer 75 µm wurde mit einer Mühle zerkleinert, bis von diesem Anteil wieder 75 % im Nutzbereich lagen.

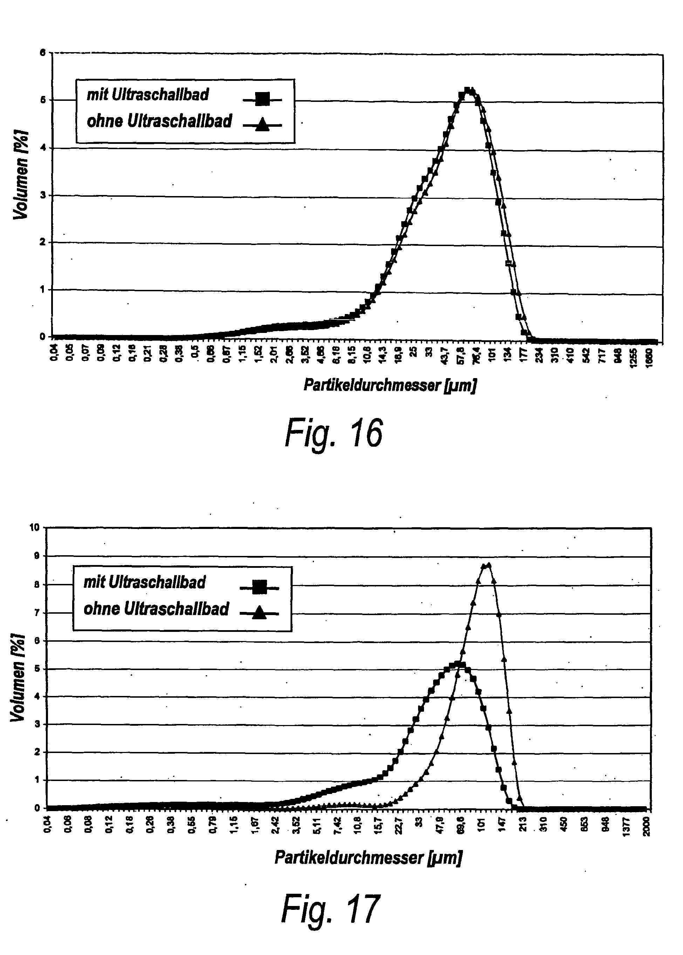

Figur 16 beweist für dieses erste Ausführungsbeispiel, dass diese so hergestellten Werkstoffteilchen mechanisch stabil sind, da sie in einem Ultraschallbad nicht oder kaum zerfallen. Das heißt, dass die abriebfesten oder kratzbeständigen Materialpartikel mechanisch stabil an der Celluloseoberfläche angeheftet sind.

### Ausführungsbeispiel 2:

Das zweite Ausführungsbeispiel betrifft ein Beispiel der Herstellung partikelförmigen zusammengesetzten Werkstoffs.

20 kg hochreine, mikrokristalline Cellulose HEWETEN (Fa. J.Rettenmaier & Söhne GmbH+CO.KG) Typ 101 mit einer mittleren Partikelgröße von 50 µm und einem Sieb-rückstand (Luftstrahlsieb) von mindestens 50 % auf dem 32 µm-Sieb, einem Schüttgewicht von 250 g/l bis 310 g/l wurde aufgelockert. Die Cellulosefasern wurden mit 20 1 Köstrosol 1530 (Chemiewerk Bad Köstritz GmbH) befeuchtet.

Diese Lösung aus synthetisch hergestellten, amorphen kolloidalen Siliciumdioxid-Partikeln mit einer spezifischen Oberfläche von 170 m²/g, einem Feststoffanteil von 29,6 % und einer Viskosität von 4,5 Pas wird mit 1 1/min dosiert und mit Hilfe eines Düsensystems gleich verteilt auf die Cellulose gesprüht. Nach Abschluss der Köstrosolzugabe wurde 15 min vorgetrocknet.

Im nächsten Verfahrensschritt wurden im Verlauf von 15 min 8 kg Edelkorund-silanisiert mit einem D50-Wert von 9,8 µm zugeführt. Nach etwa 10 min. waren die Edelkorundpartikel gebunden. Bei einer Raumtemperatur von 20°C und einer relativen Luftfeuchte von 58 % wurden die Körner des zusammengesetzten Werkstoffs 5 Stunden getrocknet und erhalten dabei ihre Stabilität. Das fertige Produkt wurde noch in seinem Kornspektrum mit einer Siebbespannung von 75 µm und 42 µm eingegrenzt. Im Nutzbereich 42-75 µm lagen 77 % der zusammengesetzten Werkstoffteilchen, in diesem Fall partikelförmige zusammengesetzte Werkstoffkörner, 6 % waren kleiner als 42 µm und 17 % größer als 75 µm. Der Anteil größer 75 µm wurde mit einer Mühle zerkleinert, bis von diesem Anteil wieder 50 % im Nutzbereich lagen.

### Ausführungsbeispiel 3:

Das dritte Ausführungsbeispiel betrifft ein Beispiel der Herstellung eines faserförmigen zusammengesetzten Werkstoffs mit geringem Anteil nanoskaliger Partikel.

10 kg natürliche Cellulosefasern ARBOCEL (Fa. J.Rettenmaier & Söhne GmbH+CO.KG) Typ BE600-10TG mit einem Celluloseinhalt von 99,5 %, einer mittleren Faserlänge von 18 µm, einer durchschnittlichen Faserdicke von 15 µm und einem Sieb-rückstand (Luftstrahlsieb) von maximal 2 % auf dem 32 µm-Sieb, einem Schüttgewicht von 240 g/l bis 300 g/l wurden aufgelockert. Die Cellulosefasern wurden mit 2 1 Köstrosol 1530 (Chemiewerk Bad Köstritz GmbH) befeuchtet.

Diese Lösung aus synthetisch hergestellten, amorphen kolloidalen Siliciumdioxid-Partikeln mit einer spezifischen Oberfläche von 170 m²/g, einem Feststoffanteil von 29,6 % und einer Viskosität von 4,5 Pas wird mit 0,3 1/min dosiert und mit Hilfe eines Düsensystems auf die Cellulose gesprüht.

Nach Abschluss der Köstrosolzugabe wurde 5 min vorgetrocknet. Danach wurde das angefeuchtete Gemisch auf einer hydraulischen Presse S/KHA 100 (KOMAGE Gellner KG) mit einer Presskraft vom 1000 kN in zylindrische Scheiben von 250 x 6 mm gepresst.

Nach 24-stündiger Lufttrocknung wurden die Scheiben in einem Laborbackenbrecher vorzerkleinert und anschließend in einer drehzahlgesteuerten Schlagnasenmühle auf das erforderliche Partikelgrößenspektrum gebracht.

Für das dritte Ausführungsbeispiel verdeutlicht Figur 17, dass es möglich ist, dass ein nicht zu vernachlässigender Anteil des zusammengesetzten Werkstoffs dem Ultraschallbad nicht standhält, also Edelkorundpartikel vom zusammengesetzten Werkstoff abgespalten wurden. Trotzdem bezieht sich die Erfindung auch auf solchen zusammengesetzten Werkstoff.

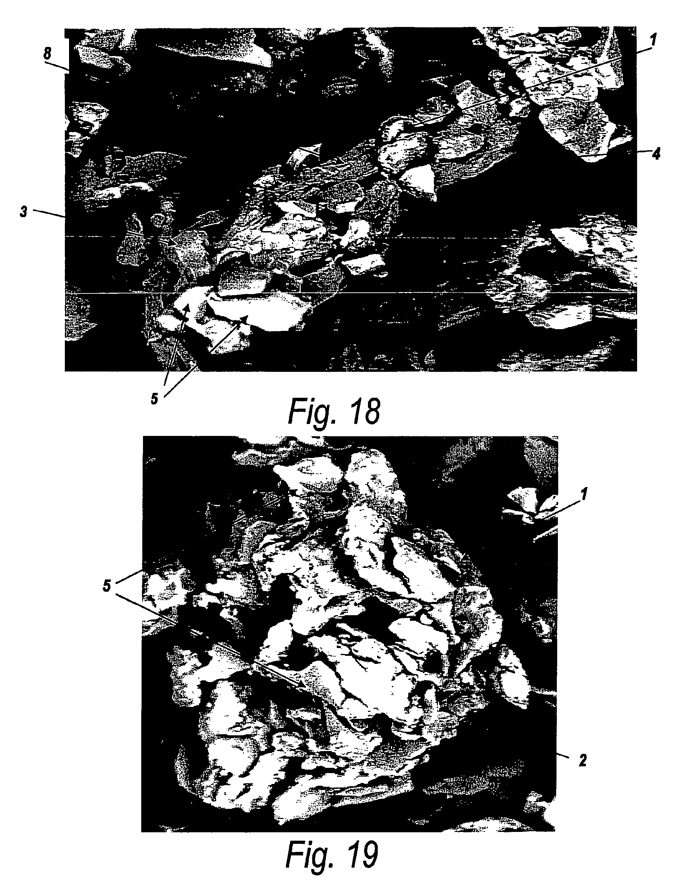

Zur Verdeutlichung der Ausführungsbeispiele wird weiter auf die Figuren 18 bis 21 verwiesen.

Figur 18 zeigt das rasterelektronische Bild eines faserförmigen zusammengesetzten Werkstoffs, der nach einem Fertigungsverfahren gemäß Ausführungsbeispiel 1 hergestellt wurde.

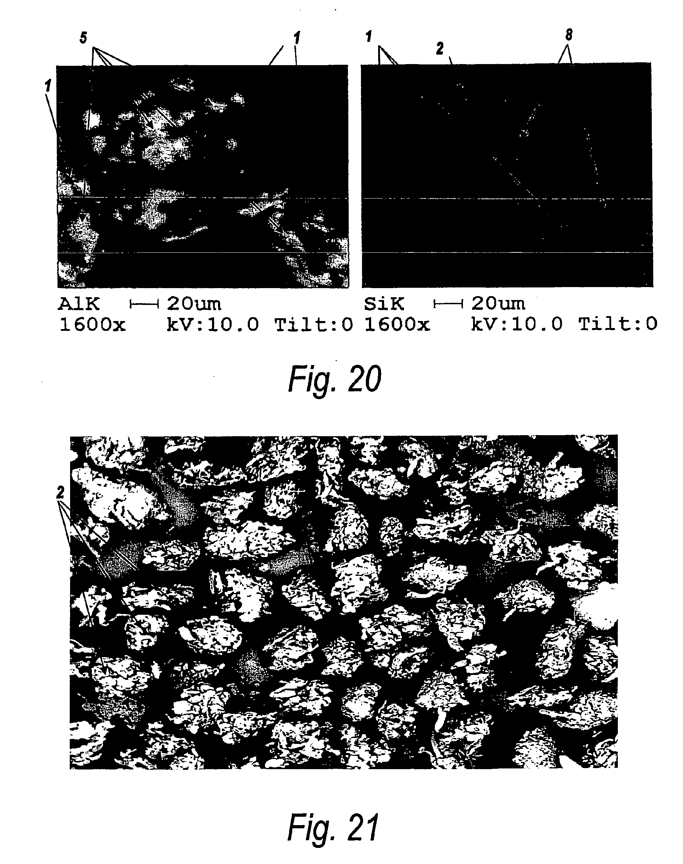

Figur 19 zeigt das rasterelektronische Bild eines partikelförmigen zusammengesetzten Werkstoffs, der nach einem Fertigungsverfahren gemäß Ausführungsbeispiel 2 hergestellt wurde. Figur 20 macht die Verteilung von Aluminiumoxid, in der in Figur 20 links dargestellten Aufnahme, und Siliciumdioxid, in der in Figur 20 rechts dargestellten Aufnahme, auf der Celluloseoberfläche sichtbar. Figur 21 widerspiegelt das Werkstoffhaufwerk für den Partikelgrößenbereich 42-75 µm.

Es ist deutlich, dass die Erfindung gemäß all ihren Aspekten vorzugsweise bei Laminatpaneelen angewendet werden kann, die mittels der in der Einleitung beschriebenen DPL-Technik hergestellt sind. Sie ist jedoch nicht auf diese Anwendung beschränkt. Sie kann auch bei Paneelen angewendet werden, die eine andere Deckschicht aufweisen als eine Laminatschicht, wie beispielsweise bei Paneelen mit einer Lackschicht-und/oder einem Dekor, das direkt auf das Substrat, eventuell unter Dazwischentreten einer Grundierungsschicht, gedruckt ist. Die hierbei angewandten Lacke betreffen dann beispielsweise UV-aushärtende Lacke oder durch Elektronenstrahl aushärtende Lacke.

Weiter ist es deutlich, dass das Substrat der Paneele der Erfindung aus gleich welchem Material bestehen kann und entweder aus mehreren Lagen oder Teilen zusammengesetzt sein kann oder nicht. Beispielsweise kann das Substrat aus Holz oder aus Material auf Holzbasis, wie etwa Sperrholz, OSB-Platte, Spanplatte, poröser Holzfaserplatte, MDF oder HDF bestehen. Andere Beispiele von Substraten sind Substrate auf Basis von Kunststoff oder Substrate, die aus einer Substanz bestehen, die mittels Wasser ausgehärtet ist, wie etwa eine Zementfaserplatte.

Als Beispiel für eine andere Anwendung des zusammengesetzten Werkstoffs des ersten Aspekts und der zusammengesetzten Werkstoffe, die mittels eines Verfahrens gemäß dem zweiten Aspekt erhalten werden, wird angemerkt, dass diese zusammengesetzten Werkstoffteilchen zur Herstellung von Papier verwendet werden können. So kann auf Basis von DE 196 04 907 oder DE 2 149 250 eine verbesserte und erfinderische Papierproduktion erhalten werden, wenn die dort beschriebenen abriebfesten Partikel durch die zusammengesetzten Werkstoffe der vorliegenden Erfindung ersetzt werden. Unter Verweis auf Artikel 80 des überarbeiteten Europäischen Patentübereinkommens (EPÜ2000) werden die Beschreibung und Zeichnungen von DE 196 04 907 und DE 2 149 250 in das vorliegende Dokument aufgenommen und es wird darauf hingewiesen, dass die vorliegende Erfindung sich gemäß einem besonderen unabhängigen Aspekt davon auch auf das oben angeführte erfinderische Verfahren zur Produktion von Papier und auf Papierbögen, die auf derartige Weise erhalten sind oder erhalten werden können, bezieht. Gemäß einer bevorzugten Ausführungsform des oben angeführten dritten Aspekts betrifft die Erfindung auch Paneele mit einer Deckschicht, die solchen Papierbogen umfasst.

## Patentansprüche

1. Zusammengesetzter Werkstoff (1), **dadurch gekennzeichnet, dass** er einen Träger (4) aus einem Faserwerkstoff (Faserträger) aufweist, auf dem mindestens ein Material (5) mit abriebfesten und/oder kratzbeständigen Eigenschaften fixiert ist.

2. Zusammengesetzter Werkstoff nach Anspruch 1, **dadurch gekennzeichnet, dass** der Träger (4) aus Cellulose-Mikrofasern und/oder mikrokristalliner Cellulose besteht.

3. Zusammengesetzter Werkstoff nach Anspruch 1 oder 2, **dadurch gekennzeichnet, dass** der Träger eine Faser- bzw. Partikelgröße zwischen 5 und 600 µm, bevorzugt zwischen 10 und 100 µm, weiter bevorzugt zwischen 20 und 60 µm aufweist.

4. Zusammengesetzter Werkstoff nach einem der Ansprüche 1 bis 3, **dadurch gekennzeichnet, dass** das abriebfeste oder kratzbeständige Material (5) aus einem mineralischen Werkstoff oder Keramikwerkstoff besteht.

5. Zusammengesetzter Werkstoff nach einem der Ansprüche 1 bis 4, **dadurch gekennzeichnet, dass** das abriebfeste oder kratzbeständige Material (5) ausgewählt ist aus der Gruppe bestehend aus Aluminiumoxid, Siliziumdioxid, Titandioxid, Zinnoxid, Zirkoniumoxid, Siliciumcarbid, Borcarbid und Diamant.

6. Zusammengesetzter Werkstoff nach einem der Ansprüche 1 bis 5, **dadurch gekennzeichnet, dass** das abriebfeste oder kratzbeständige Material (5) aus Partikeln mit einer mittleren Größe zwischen 0,7 und 70 µm, bevorzugt 5 und 30 µm besteht.

7. Zusammengesetzter Werkstoff nach einem der Ansprüche 1 bis 6, **dadurch gekennzeichnet, dass** das abriebfeste oder kratzbeständige Material (5) oberflächenmodifiziert ist.

8. Zusammengesetzter Werkstoff nach einem der Ansprüche 1 bis 7, **dadurch gekennzeichnet, dass** zusätzlich Fixiermittel (6) für die Fixierung des abriebfesten oder kratzbeständigen Materials (5) auf dem Faserträger (4) vorgesehen sind.

9. Zusammengesetzter Werkstoff nach Anspruch 8, **dadurch gekennzeichnet, dass** die Fixiermittel (6) nanoskalige Partikel (7) umfassen.

10. Zusammengesetzter Werkstoff nach Anspruch 9, **dadurch gekennzeichnet, dass** die nanoskaligen Partikel Siliciumdioxidpartikel umfassen.

11. Zusammengesetzter Werkstoff nach Anspruch 10, **dadurch gekennzeichnet, dass** die nanoskaligen Partikel wenigstens eine Sol-Gel-Fällungskieselsäure umfassen.

12. Zusammengesetzter Werkstoff nach einem der Ansprüche 9 bis 11, **dadurch gekennzeichnet, dass** die nanoskaligen Partikel eine mittlere Teilchengröße d50 von 1 bis 150 nm, vorzugsweise 2 bis 100 nm, weiter vorzugsweise 3 bis 75 nm, weiter vorzugsweise 4 bis 50 nm, weiter vorzugsweise 5 bis 30 nm aufweisen.

13. Zusammengesetzter Werkstoff nach einem der Ansprüche 1 bis 12, **dadurch gekennzeichnet, dass** er faserförmig oder partikelförmig ist.

14. Zusammengesetzter Werkstoff nach einem der Ansprüche 1 bis 13, **dadurch gekennzeichnet, dass** er im Mittel eine maximale Abmessung zwischen 1 und 700 µm, bevorzugt zwischen 5 und 100 µm, weiter bevorzugt zwischen 20 und 70 µm aufweist.

15. Zusammengesetzter Werkstoff nach einem der Ansprüche 9 bis 14, **dadurch gekennzeichnet, dass** er 2-90 Gew.-% Faserträger, vorzugsweise Cellulose (10), 1-50 Gew.-% nanoskalige Partikel und 1-60 Gew.-% Material (5) mit abriebfesten und/oder kratzbeständigen Eigenschaften umfasst.

16. Zusammengesetzter Werkstoff gemäß einem der Ansprüche 9 bis 15, **dadurch gekennzeichnet, dass** die nanoskaligen Partikel (7) eine spezifische BET-Oberfläche von 1700 m²/g bis 10 m²/g besitzen.

17. Paneel, das ein Substrat und eine Deckschicht (19) mit wenigstens einem Dekor umfasst, **dadurch gekennzeichnet, dass** die Deckschicht einen zusammengesetzten Werkstoff (1) gemäß einem der Ansprüche 1 bis 16 aufweist.

18. Paneel nach Anspruch 17, **dadurch gekennzeichnet, dass** der zusammengesetzte Werkstoff (1) sich im Wesentlichen an der Oberseite (32) des Paneels oder unmittelbar darunter befindet.

19. Paneel nach Anspruch 17 oder 18, **dadurch gekennzeichnet, dass** die Deckschicht (19) ein Harz (20), vorzugsweise Melaminharz, umfasst.

20. Paneel nach Anspruch 19, **dadurch gekennzeichnet, dass** der zusammengesetzte Werkstoff (2-3) in der obersten Harzschicht konzentriert ist und dass diese Harzschicht eine Dicke zwischen 5 und 75 µm und bevorzugt zwischen 15 und 50 µm aufweist.

21. Paneel nach Anspruch 19 oder 20, **dadurch gekennzeichnet, dass** die Deckschicht (19) wenigstens einen mit Harz (20) versehenen Trägerbogen (21) umfasst.

22. Paneel nach Anspruch 21, **dadurch gekennzeichnet, dass** das Paneel als Trägerbogen (21) wenigstens ein Overlay (22) umfasst, das vorzugsweise im Wesentlichen aus Alphacellulose besteht und ein unbeharztes Gewicht zwischen 10 und 40 g/m², vorzugsweise zwischen 20 und 25 g/m² aufweist.

23. Paneel nach Anspruch 21 oder 22, **dadurch gekennzeichnet, dass** das Paneel als Trägerbogen (21) wenigstens eine Dekorschicht (23) umfasst, die einen Aufdruck (24) oder eine Einfärbung aufweist, der wenigstens teilweise das Dekor bildet, wobei dieser Trägerbogen (21) bevorzugt ein Papierbogen ist, der ein unbeharztes Gewicht zwischen 55 und 100 g/m², vorzugsweise zwischen 70 und 90 g/m² aufweist.

24. Paneel nach einem der Ansprüche 17 bis 23, **dadurch gekennzeichnet, dass** das Paneel ein Laminatpaneel ist, dessen Deckschicht (19) mittels einer DPL-Technik oder einer HPL-Technik hergestellt ist.
